(19) Europäisches Patentamt
European Patent Office
Office européen des brevets

(11) **EP 3 898 359 B1**

(12) **EUROPÄISCHE PATENTSCHRIFT**

(45) Veröffentlichungstag und Bekanntmachung des Hinweises auf die Patenterteilung:
**08.02.2023 Patentblatt 2023/06**

(21) Anmeldenummer: **19831586.3**

(22) Anmeldetag: **20.12.2019**

(51) Internationale Patentklassifikation (IPC):
**B60T 13/58** (1968.09)    **B60T 13/74** (1968.09)

(52) Gemeinsame Patentklassifikation (CPC):
**B60T 13/745; B60T 13/588; B60T 13/66;**
B60T 2270/402

(86) Internationale Anmeldenummer:
**PCT/EP2019/086870**

(87) Internationale Veröffentlichungsnummer:
**WO 2020/128081 (25.06.2020 Gazette 2020/26)**

(54) **FAHRZEUGACHSE MIT ELEKTRISCHEN ANTRIEBSMOTOREN UND ELEKTROHYDRAULISCHER BREMSE UND WEITERER MODULE WIE GETRIEBE, TORQUE VEKTORING UND PARKBREMSE**

VEHICLE AXLE WITH ELECTRIC DRIVE AND ELETRO-HYDRAULIC BRAKE AND FURTHER MODULES LIKE GEARBOX, TORQUE VECTORING AND PARKING BRAKE

ESSIEU DE VÉHICULE AVEC PROPULSION ÉLECTRIQUE, FREIN ÉLECTRO-HYDRAULIQUE ET MODULES ADDITIONNELS COMME ENGRENAGE, VECTEUR DE COUPLE, ET FREIN DE STATIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018 DE 102018133223**

(43) Veröffentlichungstag der Anmeldung:
**27.10.2021 Patentblatt 2021/43**

(60) Teilanmeldung:
**22203469.6**

(73) Patentinhaber:
• **IPGATE AG**
**8808 Pfäffikon SZ (CH)**
• **LSP INNOVATIVE AUTOMOTIVE SYSTEMS GMBH**
**85774 Unterföhring (DE)**

(72) Erfinder: **LEIBER, Thomas**
**22203 Rogoznica (HR)**

(74) Vertreter: **Felber, Josef et al**
**Felber & Partner AG**
**Dufourstrasse 116**
**8008 Zürich (CH)**

(56) Entgegenhaltungen:
**EP-A1- 3 208 162       WO-A1-2013/140221**
**DE-A1-102011 084 206    DE-A1-102013 224 313**
**DE-U1-202015 008 975    DE-U1-202015 008 976**

**Beschreibung**

Die vorliegende Erfindung betrifft eine Vorrichtung für ein elektrische Achse für E-Fahrzeuge insbesondere ausgelegt für Fahrzeuge im zunehmenden autonomen Fahrbetrieb

**Stand der Technik**

Die Automobilindustrie befindet sich in einem disruptiven Veränderungsprozess. Neben der zunehmenden Marktdurchdringung von Elektrofahrzeugen werden verschiedene Stufen des automatisierten Fahrens durchlaufen, dies sind zunächst: Stufe 3 - Hoch Automatisiertes Fahren - HAD, Stufe 4 - Voll Automatisiertes Fahren - FAD und Stufe 5 - Autonomes Fahren - AD, wobei bei jeder Stufe die Anforderungen an die verwendeten Bremssysteme steigen. Hierdurch wurde die Entwicklung von neuen Bremssystemen vorangetrieben. Die Ablösung von Vakuumbremskraftverstärkern durch elektrische Bremskraftverstärker (e-BKV) begann 2005 nach ersten Lösungsansätzen [ATZ Ausgabe 6/11] mit der Markteinführung von sog. 2-Box-Lösungen mit elektrischen Folgebremskraftverstärkern und zusätzlicher ESP-Einheit im Jahr 2013 [ATZ-Ausgabe 4/18], zeitnah gefolgt durch erste integrierte 1-Box Systeme mit Pedalsimulator im Jahr 2017 [Bremsenhandbuch - Kapitel 20]. Aktuell werden Lösungen für die Stufe 3 (HAD) entwickelt.

Ab Stufe 3 (HAD) ist eine redundante Druckversorgung erstmalig zwingend erforderlich. Zudem ist eine Verbindung der Bremskreise mit den Vorratsbehälter bei offenen Bremssystemen weitestgehend zu vermeiden und Pedalgefühlsimulatoren mit konstanter Pedalcharakteristik einzusetzen. Weiter muss auch eine Redundanz der ABS-Funktion bereitgestellt werden. Dies wird bei sog. 2-Box-Systemen mit elektrischem Bremskraftverstärker und ESP/ABS-Aggregat gemäß Stand der Technik gemäß DE112009005541B3 derart realisiert, dass der elektrische Bremskraftverstärker (e-BKV) eine Druckmodulations-Funktion bei Ausfall des ESP-Aggregates übernimmt, um stets eine hohe Fahrzeugverzögerung zu gewährleisten. Hier wurde im ersten Schritt eine sog. "ABS select-low Regelung" eingeführt.

Ab Stufe 4 (FAD) werden für ausreichende Systemverfügbarkeit 3-fach Redundanzen erwartet, z.B. bei den Pedalsensoren mit der Regel "2 aus 3". Zudem ist ein Pedalsimulator wegen zunehmender Rekuperationsleistung von Elektrofahrzeugen und fehlender Akzeptanz der Veränderung der Pedalcharakteristik zwingend, weil vollautomatisches Fahren (FAD) über eine längere Zeitdauer betrieben werden kann und der Fahrer bei Übergang auf pilotiertes Fahren nicht auf eine Veränderung der Pedalcharakteristik vorbereitet ist. Zur Überwachung der Druckversorgung ist ein redundanter Druckgeber vorzusehen bzw. eine alternative Diagnosemöglichkeit vorzusehen. Weiter wird eine redundante ABS-Funktion mit zumindest achsindividueller Regelung gefordert werden und es werden Teilredundanzen eingeführt. Bremssysteme mit geschlossenen Bremskreisen im ABS-Betrieb haben Sicherheitsvorteile.

In Stufe 5 (AD) sind Pedalweggeber und Pedalsimulator sowie deren Charakteristik nicht mehr relevant. Dagegen werden die restlichen Komponenten und Teilsysteme eine 3-fach Redundanz, mit der Regel "2 aus 3" bei Sensoren, Steuer- und Regeleinheiten ECU und Teil-ECU, oder mehrfach Redundanz, aufweisen. Zudem ist eine vollkommene Redundanz für die radindividuelle Regelung vorzusehen.

Mehrere neue Fahrzeughersteller wie z.B. Apple, Uber oder Waymo arbeiten an komplett autonom fahrenden Fahrzeugen ohne Fahrer, die in der ersten Ausbaustufe ein Bremspedal mit einfacher Pedalgefühlsimulatoreinheit aufweisen (Stufe 4 FAD) und in der letzten Ausbaustufe (Stufe 5 AD) kein Bremspedal mehr haben sollen. Zudem setzen sich Fahrzeug mit starken elektrischen Antriebsmotoren sowohl an der Hinterachse als auch an der Vorderachse zunehmend durch.

Neben den beschriebenen elektrohydraulischen Bremssystemen gibt es die elektromechanische Bremse (EMB, elektromechanische Keilbremse) als bekannten Lösungsansatz. Die EMB hat sich in der Vergangenheit aufgrund von Sicherheitsbedenken und hohen Kosten nicht durchgesetzt. Die hohen Kosten sind insbesondere darin begründet, dass für jede Radbremse ein Elektromotor sowie ein aufwändiger elektromechanischer Mechanismus erforderlich ist. Zudem hat eine EMB sehr viele elektrische Kontaktstellen, die bekanntlich fehleranfälliger als hydraulische Leitungen sind.

Bremssysteme für die Stufen FAD und AD können aus Kosten- und Zuverlässigkeitsgründen nicht ausschließlich EMB oder Keilbremsen aufweisen. Eine EMB ist nur für die Hinterachse eines Fahrzeuges geeignet, weil die Hinterachse geringeren Anteil an der Bremskraft hat und ein Ausfall nicht so kritisch betrachtet wird wie an der Vorderachse. So ist ein hydraulisches Bremssystem mit Regelung im vorwiegenden geschlossenen Bremskreis über eine elektrische angetriebene Kolben-Zylinder-Einheit zu präferieren.

In DE102005055751B4 und DE102005018649B4 ist die hochpräzise Kolbendruckregelung (PPC = Piston Pressure Control) mittels einer elektrisch angetriebenen Kolben-Zylinder-Einheit mit Spindeltrieb ausgeführt. Der Druck wird unter Verwendung eines nicht-linearen Kennfeldes, der sog. Druck-Volumen-Kennlinie gesteuert, in dem der Zusammenhang zwischen Druck und Kolbenposition ausgewertet wird. Alternativ oder ergänzend wird der Druck durch Phasenstromsteuerung des Elektromotors genutzt, wobei der physikalische Zusammenhang der Proportionalität zwischen Strom zu Drehmoment und aufgrund einer bekannten Kolbenfläche und festen Getriebeübersetzung auch Proportionalität zwischen Strom und Druck besteht und genutzt wird. Mit diesen beiden Kenngrößen kann der Druck und der Drückänderungsverlauf sehr genau geregelt werden.

In EP1874602B1 und EP2396202B1 ist das sog. Multiplex-Verfahren (MUX) beschrieben, dass sich besonders für die Anforderungen der Stufe 4 und 5 eignet, da ein geschlossenes Bremssystem, wie später ausgeführt, keine schlafenden Fehler aufweist. Zudem können mehrere Radbremsen mit nur je einem Schaltventil gleichzeitig oder nacheinander im Druck auf- und abgebaut werden. Nachteilig sind die hohen Dynamikanforderungen an den Elektromotor, insbesondere wenn alle Radbremsen mit einem Motor geregelt werden. Dies erfordert einen speziellen Motor mit doppelten Luftspalt wie er z.B. aus EP 1759447B1 bekannt ist oder einen Motor mit sehr geringer Trägheitsmasse.

In WO201614622A2 ist zudem eine spezielle Ventilschaltung von Schaltventilen ausgeführt, wo der Innenraum des Schaltventils über eine Hydraulikleitung mit dem zugehörigen Bremskreis und der Ventilsitzausgleich über eine Hydraulikleitung mit der zugehörigen Radbremse verbunden ist. Diese Ventilschaltung ist insbesondere für das MUX-Verfahren mit nur einem Schaltventil pro Bremskreis geeignet, da sich im Fehlerfall das Magnetventil durch den Druck in der Radbremse öffnet und damit verhindert, dass der Druck in der Radbremse eingesperrt bleibt, was zur ungewollten Fahrzeugverzögerung führt.

Bestimmte Komponenten von Bremssystemen sind als sicherheitskritisch zu betrachten. Dies sind Dichtungen von Kolben, Magnetventile und Kugelgewindetrieb. In der nachfolgenden sind verschiedene Fehler und deren Auswirkungen aufgeführt:

- Kolben: Kolbendichtungen können ausfallen, wobei die Undichtigkeit z.B. noch nicht bei kleinen Drücken, sondern erst bei hohem Drücken auftreten kann. Eine Undichtigkeit führt zu einem Ausfall der Kolbenfunktion. Kolben werden in Wegsimulatoren, Druckversorgungen und Hauptbremszylindern (HZ) eingesetzt und können zu Pedaldurchfall bzw. Ausfall der Druckversorgung führen.

- Magnetventile: Schmutzpartikel können sich im Ventilsitz absetzen. Wenn Magnetventile in einem offenen Bremssystem z.B. mit dem Vorratsbehälter verbunden sind, können sich bei Schließvorgang Partikel absetzen und die Verbindung ist nicht dicht. Die Dichtigkeit kann im geöffneten Zustand nicht diagnostiziert werden.

- Kugel-Gewinde-Trieb: Kugel-Gewinde-Triebe verschleißen über Lebensdauer und können klemmen, insbesondere wenn Schmutzpartikel in den Kugel-Gewinde-Trieb gelangen. Dies kann zu Ausfällen der Druckversorgung führen.

Die Anforderungen für Bremssysteme der Stufe 3 (HAD), Stufe 4 (FAD) und Stufe 5 (AD) und bei E-Fahrzeugen, die zunehmend starke elektrische Antriebsmotoren an einer oder mehreren Achsen aufweisen, lassen sich wie folgt zusammenfassen:

- absolut geräuschloser Betrieb, d.h. keine störenden Geräusche von Aggregaten an der Spritzwand;

- noch kürzere Bauweise als bei konventionellen PKWs aufgrund neuer Fahrzeug-Plattformkonzepten bei E-Fahrzeugen;

- Radindividueller oder achsindividueller Bremseingriff, auch bei Komplett- oder Teilausfall von Modulen;

- Funktionsumfang ABS, ESP, ASR, Rekuperation und Torque Vectoring mit möglichst geringer Einschränkung der Leistungsfähigkeit auch bei Komplett- oder Teilausfall von Modulen;

- Maximale Rekuperation der kinetischen Energie des Fahrzeuges durch maximale Ausnutzung der Bremsleistung durch Elektromotoren; daher dynamische und genaue bedarfsgerechte Steuerung des hydraulischen Bremssystems;

- Nutzung von verfügbaren Bremsmomenten, z.B. von Antriebsmotoren für Vereinfachung der Bremssysteme bzw. Verkürzung des Bremsweges;

- Verstärkte Sicherheit durch Redundanz der Systeme, Signalübertragungen und Stromversorgung;

- Diagnoseverfahren zur Erkennung von Leckagen bzw. Vermeidung schlafender Fehler;

- hohe Anforderungen an die Regelgenauigkeit zur weiteren Bremswegverkürzung, insbesondere beim gemeinsamen Wirken von elektrischen Antriebsmotoren und hydraulischen Bremsmomenten;

- hohe Modularität der Systeme, d.h. der Verwendung von gleichen Teilen/Modulen, insbesondere bei der Druckversorgung; Modularität ist getrieben durch Vielzahl an Fahrzeugantriebskonzepten, insbesondere in einer Koexistenz von Fahrzeugen mit Verbrennungsmotoren, Hybridfahrzeugen und reinen E-Fahrzeugen (Verbrennungsmotoren, Hybridmotoren, reine E-Fahrzeuge, fahrerlose Fahrzeuge).

Nachdem sich Elektrofahrzeuge zunehmend am Markt durchsetzen, finden E-Achskonzepte zunehmend Verbreitung. Dort sind an einer oder mehreren Achsen Elektromotoren fester Bestandteil und es werden Achskonzepte mit integriertem Elektromotor von diversen Zulieferern zunehmend als Teil von Plattformen von E-Fahrzeugen angeboten. Damit wird eine maximale Flexibilität in der Fahrzeuggestaltung erreicht und Fahrzeuge können neue Fahrzeuginnenraumkonzepte realisieren, weil der Verbrennungsmotor nicht mehr baulängenlimitierend ist.

Um die Baulänge weiter zu minimieren, ist es daher sinnvoll Bremssysteme und Kupplungssteller in eine E-Achse zu integrieren und die Spritzwand des Fahrzeuges zu entschlacken mit weniger Betätigungselementen oder keinen Bestätigungselementen im Falle des vollen autonomen Fahrens. Ein weiteres Beispiel des Standes der Technik ist im Dokument WO 2013/140221 A1 offenbart.

## Aufgabe der Erfindung

Aufgabe der vorliegenden Erfindung ist es, eine Fahrzeugachse für Elektrofahrzeuge mit integriertem Aktuator für Brems- und Fahrdynamikaufgaben bereitzustellen, womit die Anforderungen der hohen Verfügbarkeit beim vollautomatisierten Fahren (FAD) und beim autonomen Fahren (AD) erfüllt werden und zusätzlich die Grundlage geschaffen wird für die Integration von weiteren hydraulischen Stellgliedern, insbesondere für die Lenkung, Getriebesteller sowie Torque Vektoring Module.

## Lösung der Aufgabe

Die Aufgabe der Erfindung wird durch eine Fahrzeugachse mit den Merkmalen des Patentanspruchs 1 gelöst. Vorteilhafte Ausgestaltungen der Fahrzeugachse nach Anspruch 1 ergeben sich durch die Merkmale der Unteransprüche.

Die Erfindung zeichnet sich vorteilhaft dadurch aus, dass Redundanzanforderungen des vollautomatisierten Fahrens (FAD) und autonomen Fahrens (AD) erfüllt werden und gleichzeitig hohe Synergieeffekte im Zusammenwirken des Bremssystems mit elektrischen Antriebsmotoren von Elektrofahrzeugen genutzt werden. So ist beispielsweise die Energierückgewinnung von kinetischer Energie durch den Elektromotor nicht durch das Bremssystem wie zum Beispiel bei Folgebremskraftverstärkern ohne Wegsimulator gemäß DE 11 2009 005 541 B3 eingeschränkt, gleichzeitig kann der Elektromotor zum Bremsen beitragen. So wird die erfindungsgemäße Fahrzeugachse vorteilhaft für FAD mit einer Betätigungseinheit (BE) mit Pedalfühlsimulator ausgestattet. Es ist jedoch ebenso möglich, das erfindungsgemäße Bremssystem für AD ohne Betätigungseinheit (BE) auszuführen, wobei dann die Steuerung des Bremssystems über eine übergeordnete Steuerung erfolgt.

In der Ausführungsform für die Stufe 4 (FAD) muss für das autonome Fahren eine Betätigungseinheit mit entsprechenden Redundanzen vorgesehen werden. Die Betätigungseinheit (BE) weist dabei optional eine hydraulische Verbindung zu mindestens einem Bremskreis auf oder wird als reiner Pedalgefühlsimulator ohne Verbindung mit der Hydraulik des Bremssystems eingesetzt, wobei die Übertragung der Betätigungskraft dann rein elektrisch erfolgt. Ein elektrisches Bremspedal (E-Bremspedal) kann dabei hydraulisch oder auch elektromechanisch ausgeführt sein. Ziel ist die Bestätigungseinheit extrem kurz zu bauen, damit die Baulängenvorteile von E-Achskonzepten maximal ausgeschöpft werden können.

Bei der Ausführungsform für das autonome Fahren (AD) ist keine Betätigungseinheit vorgesehen wobei eine zentrale Regel- und Steuereinheit (M-ECU) die Kommunikation mit den Stelleinheiten übernimmt.

Für die Fahrzeugachse mit radindividuelle redundante Bremsregelung sieht die Erfindung in einer Basisausführungsform vor, dass

- die Fahrzeugachse mindestens eine Druckversorgungseinrichtung (DV1-A1, DV2-A2) mit einer Kolben-Zylinder-Einheit aufweist, deren Kolben über ein Getriebe, insbesondere einen Spindelantrieb von einem elektromotorischen Antrieb (M1) zur Druckregelung in den Radbremsen (RB1-RB4, H-EMB) verstellt wird

- Druckversorgungseinheit ist derart redundant ausgefüllt, dass entweder eine Druckversorgereinrichtung redundant mit zwei elektronischen Steuer- und Regeleinheiten und insbesondere Kolben-Zylinder-Einheiten mit redundanten Kolbendichtungen ausgestattet ist oder eine weitere Druckversorgungeinrichtung an der gleichen Achse oder an einer weiteren Achse die Druckregelung übernimmt;

- eine oder mehrere Druckversorgereinrichtungen vorzugsweise neben den Bremsen auch weitere hydraulische Stellglieder, insbesondere Kupplungs- und Gangsteller, Getriebesperren, Torque Vektoring-Module oder auch hydraulische Lenkungsaktuatoriken, steuern bzw. für diese die Druckversorgung bilden oder die Druckregelung vornehmen;

Durch diese Ausbildung ist eine mindestens zweifache Redundanz zumindest für die Druckversorgung und deren Ansteuerung gegeben und es können mehrere hydraulische Stellglieder mit nur einer oder weniger, insbesondere zwei Druckversorgungseinrichtungen sehr präzise gesteuert werden. Damit kann eine sehr kostengünstige und zudem zuverlässige Lösung für mehrere hydraulische Stellglieder (Bremse, Getriebesteller, Lenkung) realisiert werden. Zudem kann durch die sehr präzise Drucksteuerung auf Basis der -Grundlagenpatente DE102005055751B4 und DE102005018649B4 zum PPC-Verfahren vergleichbar mit der Güte einer reinen elektromechanischen Lösung (z.B. Elektrische Servolenkung, elektromechanische Bremse) erreicht werden bei signifikant geringeren Kosten.

Die Fahrzeugachse ist vorzugsweise derart aufgebaut, dass alle hydraulischen Komponenten bzw. Stellaktuatoren (Bremse, Lenkung, Getriebeaktoren, Kupplungen, etc.) mit Slave-Elektroniken sowie hydraulischen Kontrolleinheiten HCU mit Ventilen und Druckgebern an der Fahrzeugachse positioniert sind bzw. sinnvollerweise in die Aggregate integriert sind und die Steuerung aller Module über eine übergeordnete Steuerungseinheit (M-ECU) durgeführt wird, die sich nicht an der Fahrzeugachse befindet. So sind auch Betätigungseinheiten wie insbesondere Bremspedal an der Spritzwand zum Fahrzeuginnenraum möglich. Die Betätigungseinheiten entfallen für Fahrzeuge der Stufe AD.

Die Steuersignale an die verschiedenen Komponenten bzw. Aktuatoren der Fahrzeugachse können vorzugsweise redundant übertragen werden und es wird vorzugsweise ein schnelles BUS-System wie Flexray®

zur schnellen Datenübertragung ohne Zeitverzug eingesetzt. Diagnosevorgänge sowie die Motor- und Druckregelung sind Bestandteile der Slave-ECU-Module der verschiedenen Komponenten.

In einer weiteren erfindungsgemäßen Ausbildung der Basisausführungsform zum Vorsehen einer weiteren Redundanz ist vorgesehen, dass mindestens eine, insbesondere jede, elektronische Steuer- und Regeleinheit voneinander getrennte Wicklungen des bzw. eines elektromotorischen Antriebs ansteuert. Hierdurch ist vorteilhaft gewährleistet, dass bei Ausfall eines Wicklungssystems der Antriebsmotor zumindest noch mit dem halben maximalen Drehmoment betrieben werden kann.

Die zuvor beschriebenen Ausführungsformen können zudem dadurch sicherer gestaltet werden, wenn vorteilhaft entweder jeder Druckversorgungseinrichtung jeweils eine, insbesondere redundante, Ventilanordnung oder zwei Druckversorgungseinrichtungen eine redundante Ventilanordnung zugeordnet ist. Unter einer redundanten Ventilanordnung versteht die Erfindung, dass diese derart ausgeführt ist, dass bei Ausfall einer oder beider Steuer- und Regeleinheiten der Druckversorgungseinrichtung die Magnetventile der Druckversorgung bzw. der Aggregate der Fahrzeugachse noch sicher betrieben werden können.

Bei Vorsehen einer Betätigungseinrichtung, insbesondere in Form eines Bremspedals, ist es von Vorteil, wenn dieses auf eine Kolben-Zylinder-Einheit wirkt und deren Kolben verstellt, so dass über eine hydraulische Verbindung im Fehlerfalle ein Bremsdruck mit der Betätigungseinrichtung in mindestens einem Bremskreis aufbaubar ist. Hierbei kann ein einfacher Hauptbremszylinder oder ein Tandem-Hauptzylinder und zwingend erforderlicher Pedalgefühlsimulator vorgesehen werden.

Vorteilhaft regeln die vorbeschriebenen Bremssysteme im Regelbetrieb mit geschlossenem Bremskreis, d.h. im Regelbetrieb erfolgt kein Druckabbau über Magnetventile in den Vorratsbehälter, und/oder der Druck in den Radbremsen des jeweiligen Bremskreises wird im PPC- und/oder Multiplexverfahren eingeregelt bzw. eingestellt. Zur Sicherheit sollten die Schaltventile derart an die Radbremsen angeschlossen sein, dass sie sich durch Druckbeaufschlagung durch die in Radbremse selbstständig öffnen. Hierdurch ist vorteilhaft gewährleistet, dass in jedem Fall der Bremsdruck in den Radbremsen abgebaut werden kann und es nicht zu unerwünschtem Abbremsen bzw. Blockieren der Räder kommt.

In einer weiteren sehr vorteilhaften Ausgestaltung der vorbeschriebenen Bremssysteme ist mindestens eine Radbremse, vorzugsweise zwei Radbremsen, eine hydraulisch unterstützte elektromechanische Bremse (H-EMB), eine elektrische Parkbremse (EPB) oder eine elektromechanische Bremse (EMB). Gleichsam kann neben einer herkömmlichen hydraulischen Radbremse ein Elektromotor einer zusätzlichen elektrischen Parkbremse oder einer elektromechanischen Bremse auf das Rad abbremsend einwirken. Durch diese Maßnahme wird eine weitere Redundanz geschaffen. Bei dem Vorsehen einer hydraulisch unterstützten elektromechanischen Bremse kann vorteilhaft mit dieser sowohl hydraulisch als auch elektromechanisch eine Bremskraft aufgebaut werden.

Die gesamte Regelung aller Module übernimmt vorzugsweise einer übergeordnete Steuerungseinheit (M-ECU), die sich nicht an der Fahrzeugachse befindet. Die Steuersignale an die verschiedenen Aktuatoren schickt. Sie kann dabei die Druckversorgungseinrichtungen, Ventile, elektrischen Antriebsmotoren und/oder EMB bzw. H-EMB während des Bremsvorganges und/oder ABS-Regelbetriebes und/oder zur Diagnose des Bremssystems ansteuern und kann neben der Bremse auch andere Fahrdynamikfunktionen, z.B. Lenkung, Dämpfung, Wankstabilisierung sinnvollerweise steuern.

Beim Vorsehen mindestens eines elektrischen Antriebs- bzw. Traktionsmotors für mindestens eine Achse oder Rad des Fahrzeugs kann dieser vorteilhaft für das Abbremsen einer Achse oder eines Rades mit genutzt werden. Hierdurch ist eine weitere Redundanz gegeben. So kann im Regelbetrieb oder bei Ausfall einer Komponente des Bremssystems, z.B. einer Druckversorgungseinrichtung, auch noch eine (unterstützende) Bremskraft mittels des bzw. der Traktionsmotors(-en) erzeugt werden. Durch einen kombinierten Einsatz von Druckversorgungseinrichtung(en), hydraulisch unterstützter elektromechanischen Bremse(n) H-EMB, elektrischer(n) Parkbremse(n) EPB und/oder elektromechanischer(n) Bremse(n) EMB und/oder einem oder mehrerer Antriebsmotor(en) kann vorteilhaft im Regelbetrieb oder bei Ausfall einer oder mehrerer Komponenten des Bremssystem ein schnellerer Bremskraftanstieg mit kürzerer Time to Lock (TTL) erfolgen bzw. ein höheres Bremsmoment erzeugt werden.

Vorteilhaft kann bei den vorbeschriebenen Bremssystemen jeder Druckversorgungseinrichtung mindestens ein Trennventil am Ausgang der Druckversorgung vorgeschaltet sein, wobei durch Verschließen des Trennventils die jeweilige Druckversorgungseinrichtung, insbesondere bei deren Ausfall, von dem jeweiligen Bremskreis abtrennbar ist.

Um die erfindungsgemäße Fahrzeugachse mit ihrem integrierten Bremssystem noch sicherer gegen Ausfall zu machen, kann mindestens eine Steuer- und Regeleinrichtung einer Druckversorgung und Ventilanordnung eine separate Spannungsversorgung und insbesondere Signalübertragung aufweisen, insbesondere alle Module einer Druckversorgungseinrichtung, durch mindestens zwei Bordnetze versorgt werden und/oder redundante Signalübertragungen aufweisen. Unter zwei Bordnetzen ist gemeint, dass entweder unterschiedliche Spannungsebenen und/oder Spannungsquellen zur Versorgung der Komponenten dienen.

Es ist ferner von Vorteil, wenn bei den vorgenannten möglichen Ausführungsformen des erfindungsgemäßen Bremssystems entweder die Druckregelung in einem Bremskreis unter Verwendung mindestens eines Drucksensors und/oder über die Strommessung des Motorstroms des Antriebes und Wegsteuerung des Kolbens der Druckversorgungseinrichtung erfolgt, welche durch Berücksichtigung der Temperatur des Antriebes weiter in der Druckregelgüte verfeinert werden kann. Hierdurch ist eine präzise Druckregelung auch ohne Drucksensor möglich, wie sie bereits in den Patenten zum PPC-Verfahren ( DE102005018649B4 und DE102005055751B4 in Funktion ohne Temperatursensor ausführlich erläutert ist.

Um im Fehlerfall, z.B. bei einer Ventilleckage, eine sichere Trennung der Bremskreise zu ermöglichen, und um Druck in den Radbremsen abzubauen, ist es von Vorteil, wenn ein Verbindungsmodul mit Schaltventilen zwischen den Achsen angeordnet ist, so dass entweder die Bremskreise der Vorderachse und Hinterachse miteinander verbindbar, voneinander trennbar und/oder einer oder beide Bremskreise mit dem Vorratsbehälter verbindbar sind, insbesondere wenn keine Betätigungseinrichtung vorgesehen ist, über die ein Druckabbau in den Vorratsbehälter erfolgen kann. Die für die Verbindung der Bremskreise mit dem Vorratsbehälter werden dabei vorteilhaft stromlos offene Magnetventile eingesetzt. Für die Verbindung zwischen den Druckeinheiten sind im Verbindungsmodul vorzugsweise stromlos geschlossene Magnetventile oder in der Position arretierbare Hydraulikfluidübertragungskolben einzusetzen.

Das Verbindungsmodul kann dabei entweder z. B. mehrere Magnetventile aufweisen, über die eine hydraulische Verbindung zwischen einem Bremskreis und dem Vorratsbehälter oder zwischen den beiden Bremskreisen herstellbar ist. Es ist jedoch auch möglich, dass das Verbindungsmodul durch eine Kolben-Zylinder-Einheit gebildet ist, deren Kolben einen ersten und einen zweiten Druckraum voneinander trennt, wobei der erste Druckraum mit dem einen ersten Bremskreis und der zweite Druckraum mit dem anderen zweiten Bremskreis in Verbindung ist und der Kolben mittels eines Blockiereinrichtung arretierbar ist. Im arretierten Zustand würde dann quasi keine hydraulische Verbindung zwischen den Bremskreisen bestehen, da eine Volumenverschiebung verhindert wird.

Ebenso von Vorteil ist, wenn die Kolben-Zylinder-Einheiten der Fahrzeugachse redundante Dichtungen und hydraulische Diagnoseleitungen aufweisen und zudem redundante Regel- und Steuereinheiten vorgesehen sind, und dass die Antriebe der Druckversorgungseinrichtungen 2x3 Phasen aufweisen, und dass mittels Sensoren der Motorphasenstrom $i_{phase}$, der Motorwinkel $\alpha$, insbesondere die Temperatur T, gemessen und bei der Druckregelung berücksichtigt wird, und dass eine redundante Versorgung über zwei Bordnetze bzw. Spannungsniveaus gegeben ist, und dass eine redundante Signalübertragung vorgesehen ist. Durch das Vorsehen all dieser Maßnahmen ergibt sich vorteilhaft ein sehr sicheres System, welches für die AD Stufen 3-5 geeignet ist.

Vorteilhaft kann ein Vorratsbehälter bei den vorbeschriebenen Fahrzeugachsen eingesetzt werden, der mehrere voneinander getrennte Kammern aufweist, wobei eine Kammer des Vorratsbehälters mit mindestens einer Druckversorgungseinrichtung hydraulisch verbunden bzw. verbindbar ist und/oder eine weitere Kammer mit dem Verbindungsmodul hydraulisch verbunden bzw. verbindbar ist. Hierdurch ergeben sich vorteilhaft weitere Schaltungsmöglichkeiten mittels der verwendeten Ventile, die zur weiteren Sicherheit der Fahrzeugachse beitragen.

Vorteilhaft können die vorbeschriebenen Bremssysteme der Fahrzeugachsen derart betrieben werden, dass mindestens achsweise, vorzugsweise radindividuell, die Verzögerung der Räder mittels der Druckversorgungseinrichtung(-en), dem bzw. den elektrischen Antriebsmotor(en) und der hydraulisch unterstützten elektromechanischen Bremse (H-EMB) bzw. der elektromechanischen Bremse (EMB), erfolgt. Auch kann Torque-Vectoring mittels der Druckversorgungseinrichtung(-en), dem bzw. den elektrischen Antriebsmotor(en) (TM) und der hydraulisch unterstützten elektromechanischen Bremse (H-EMB) bzw. der elektromechanischen Bremse (EMB), vorgenommen werden.

Bei Verwendung eines Temperatursensors kann zudem die Temperatur des Antriebes der Druckversorgungseinrichtung(en) ermittelt werden und die Temperatur zur genaueren Ermittlung der Drehmomentmomentkonstante verwendet werden, welche sich durch Temperaturanstieg des Rotors des Elektromotors linear um den Faktor $(1-Br\%*\Delta T)$ linear verringert. Damit kann eine noch genauere Regelung des Drehmoments und damit des Drucks vorgenommen werden sofern diese auf Basis des erfolgt, da der Zusammenhang Drehmoment = $kt(T)$ * Phasenstrom i gilt.

Zur Druckregelung kann neben der Stromregelung auch die Kolbenposition und die Druckvolumenkennlinie herangezogen werden und die Veränderung der Druckvolumenkennlinie bei z.B. Lufteinschluss, durch den Drucksensor oder die H-EMB angepasst werden. Durch den kombinierten Einsatz beider zuvor beschriebenen Verfahren ergibt sich eine hochpräzise Druckregelung, die auch ohne Drucksensor möglich ist. Dieses Verfahren liefert weitere Redundanz bei Ausfall von Druckgebern oder kann auch zur Vereinfachung des Systems mit geringen Redundanzanforderungen (z.B. System mit nur einem oder ohne Druckgeber), eingesetzt werden.

Das erfindungsgemäße Bremssystems der Fahrzeugachse kann zudem zur Lenkung/Torque Vektoring sowie für die Bestätigung von Getrieben, insbesondere Kupplungen verwendet werden, wobei die radindividuellen Regelmöglichkeiten mit der mindestens eine Druckversorgung sowie die hydraulisch unterstützte elektromechanische(n) Bremse(n) H-EMB, elektrische(n) Parkbremse(n) EPB und/oder elektromechanische(n) Bremse(n) EMB und/oder Antriebsmotoren oder der Lenkung EPS verwendet werden können.

Die Erfindung zeichnet sich somit durch einen sehr einfachen Aufbau mit sehr hoher Verfügbarkeit, d.h. bei Komplett- bzw. Teilausfall von Modulen wird die Funktion nicht bzw. in sehr geringem Umfang eingeschränkt. Auch bei Ausfall diverser Komponenten kann immer annähernd max. Verzögerung sowie Fahrstabilität sichergestellt werden. Dazu ist auch bei Ausfall einer Druckversorgungseinrichtung eine Verzögerung von 0,6 bis 0,9 g, und eine achsweise Regelung oder radindividuelle Regelung mit Lenkeingriff/Stabilitätseingriff gewährleistet. Eine hohe Verfügbarkeit und Performance wird somit - noch einmal zusammenfassend - durch folgende Maßnahmen erreicht, die einzeln oder in Kombination vorgesehen werden können:

- vornehmlicher Betrieb im geschlossen Bremskreis (>90% der Betriebszeit) sowohl im Bremskraftverstärker (e-BKV), Rekuperationsbetrieb als auch vorwiegend im ABS-Regelbetrieb, damit werden schlafende Fehler vermieden. Wird das System offenen betrieben, z.B. ist im ABS durch Öffnung eines Ventils mit dem Vorratsbehälter hydraulisch verbunden, dadurch sind unerkannte Undichtigkeiten bei Ventilen und Dichtungen (schlafende Fehler) besonders schwer zu erkennen. Daher ist der Betriebszustand zu vermeiden bzw. eine Diagnose der Dichtigkeit nach jedem ABS-Betrieb sinnvoll; eine Diagnose kann derart erfolgen, dass z.B. im Stillstand der Kolben der Druckversorgung bei geschlossenen Ventilen bewegt wird und ein Volumenverlust oder Druckanstieg ermittelt und ausgewertet wird.

- Redundanzen und Teilredundanzen der DV-Motorelektronik: z.B. Ausführung des Motors der DV als 2 x 3 Phasenmotor sowie Teilredundanz der Motoransteuerung. Damit kann bei Ausfall einer Teilelektronik (Wicklungskurzschluss, Ausfall eines 3-Phasenstranges der Motor noch mit halbem Drehmoment betrieben werden. Bei einer Auslegung auf 200 bar kann dann auch bei Ausfall noch 100 bar, d.h. näherungsweise der Blockierdruck erreicht werden. Damit ist auch bei Ausfall einer Elektronik noch ein ABS-Betrieb mit maximaler Leistung bei Niedrigreibwerten und zufriedenstellender Leistung bei Straßenzuständen mit hohen Reibwert möglich;

- Teilredundanzen der Elektronik für die Ventilansteuerung. Fällt die Elektronik aus, ist es für die Verfügbarkeit sehr vorteilhaft, wenn die Schaltventile noch betätigt werden können. Somit ist in der Elektronik eine Redundanz für die Ventilansteuerung vorzusehen, damit die Ventilbetätigung noch funktioniert bei Ausfall der Motorsteuerung;

- Einsatz einer H-EMB, EMB oder EPB im Bremsbetrieb, insbesondere Einsatz EPB oder H-EMB beim Ausfall von Modulen. Damit kann zum einem eine Radbremsung über den hydraulischen Zugang sowie über den in der H-EMB verbauten Elektromotor erfolgen. Der Elektromotor kann als EC-Motor oder Bürstenmotor ausgeführt werden. Somit kann eine Bremskraftunterstützung durch den Elektromotor am jeweiligen Rad erfolgen;

- Nutzung der eingesetzten Traktionsmotoren zur Steigerung des Bremsmomentes bei gleichzeitiger Rekuperation von kinetischer Fahrzeugenergie. Aufgrund der hohen Trägheitsmassen des Antriebsmotor ist jedoch zu berücksichtigen, dass ein Bremsmoment über den Traktionsmotor weniger dynamisch aufgebaut werden kann als über die Druckversorgung und die H-EMB, EPB oder EMB;

- Einsatz einer fehlersicheren und diagnosefähigen Betätigungseinheit mit Pedalgefühlsimulator, redundanten Wegsensoren und einem Kraft-WegSensor (KWS) sowie einer speziellen Schaltung zur Diagnose des Pedalgefühlsimulators;

- Einsatz von Ventilen mit Selbstöffnungsmechanismus bei Druck in der Radbremse in der Form, dass der Druck in der Radbremse das Magnetventil öffnet;

- Einsatz eines diagnosefähigen Verbindungsmoduls (VM) mit dem die Bremskreise sicher verbunden oder getrennt werden können und eine Verbindung der Radbremsen zum Vorratsbehälter hergestellt werden kann, insbesondere wenn das System keine Betätigungseinrichtung (BE) mit Verbindung zum Vorratsbehälter aufweist;

- Nutzung einer hydraulischen Rückfallebene in einem Bremskreis bzw. einer Achse über Verbindung der Betätigungseinheit über ein Schaltventil FV;

- Nachfördern von Volumen der DV bei Erreichen der Volumengrenze;

- Betrieb der Druckstellung ohne Druckgeber durch intelligente genaue Drehmomentschätzung aus dem Motorphasenstrom unter Einbeziehung der Motortemperatur und der Druckvolumenkennlinie, die über einen Druckgeber oder die H-EMB-Funktion abgeglichen wird;

- Einsatz von Trapezspindel (kein Blockieren der Spindel durch Schmutzpartikel in der Laufbahn);

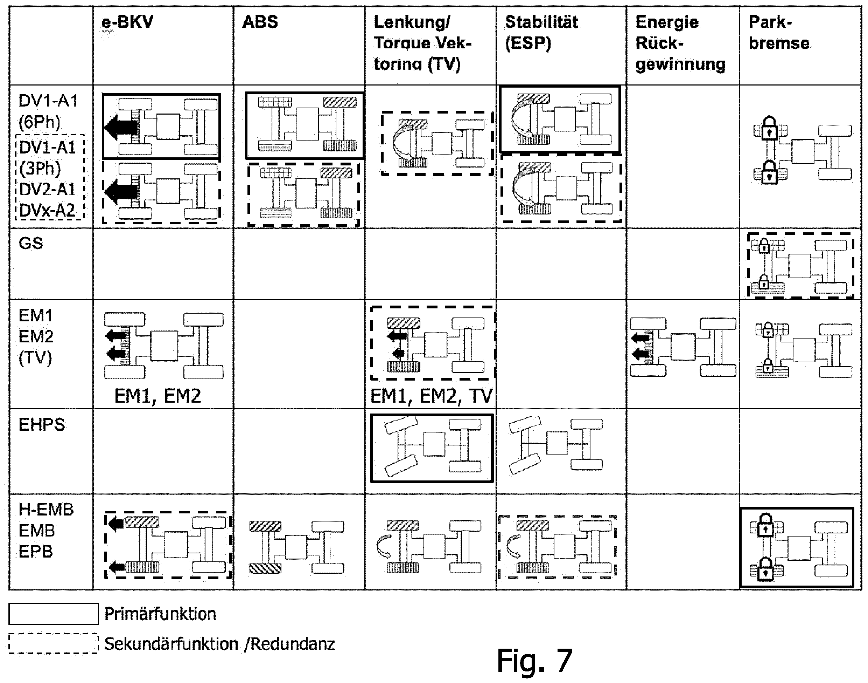

In Tabelle 1 gemäß Figur 7 sind für die erfindungsgemäße Fahrzeugachse bzw. verschiedenen fahrdynamischen Regelfunktionen, wie z.B. elektrische Bremskraftverstärkung e-BKV, ABS-Betrieb, Lenkung/Torque Vektoring, Stabilitätsregelung/ESP, Energierückgewinnung durch Elektormotor und Parkbremse EPB, Getriebesperre GS die durch die Komponenten Druckversorgung an Achse 1 (DV1-A1 und DV2-A1) oder Druckversorgung an Achse 2 (DV-A2), Antriebsmotor TM1, TM2, elektrohydraulische Lenkung EPS und hydraulische unterstützte H-EMB bzw. Parkbremse EPB abgebildet werden können, erläutert. Dabei ist die primäre Funktion sowie die Sekundärfuktion/Redundanz gekennzeichnet. Hiermit wird verdeutlicht, dass die wichtigsten Fahrdynamikfunktionen einer Achse mindestens 2-fach redundant vorhanden sind. Die Druckregelung kann bei Ausführung als 2x3 Phasenmotor und Verbindungsmodul zwischen Vorderachse und Hinterachse sogar als 3-fach redundant betrachtet werden.

Das PPC-Verfahren, siehe oben zur DE102005055751B4 und DE102005018649B4, kann durch Temperaturmessung verfeinert werden und für Bremse, Lenkung und Kupplungen verwendet werden, insbesondere bei Ausfall des Druckgebers und bildet eine weitere Redundanz im Betrieb.

Das erfindungsgemäße E-Achssystem mit integriertem Bremssystem eignet sich somit für alle Stufen des autonomen Fahrens bis zu Stufe 5 (AD).

Eine erfindungsgemäße Druckversorgungseinrichtung kann auch von einer Rotationspumpe angetrieben sein, welche insbesondere eine Zahnradpumpe sein kann. Sie kann dann ein Motorgehäuse mit darin angeordnetem elektromotorischem Antrieb aufweisen, welcher die Zahnradpumpe antreibt. Der Antrieb hat dafür einen Stator und einen Rotor. Über den Rotor des Antriebs wird ein inneres Zahnrad der Zahnradpumpe bewegt. Der Antrieb ist dabei erfindungsgemäß mittels mindestens einer Dichtung, welche zwischen Rotor und innerem Zahnrad angeordnet ist, als Trockenläufer ausgebildet bzw. weist einen trockenlaufenden Rotor auf, d.h. der Rotor des Antriebs wird nicht von dem von der Zahnradpumpe gefördertem Medium umströmt und/oder ist nicht von dem Medium umgeben. Durch die Ausbildung als Trockenläufer dreht der Rotor ohne größere Reibungs- und Strömungswiderstände, wodurch höhere Drehzahlen und ein besserer Wirkungsgrad erzielbar ist.

Eine besonders kompakte und einfache Druckversorgungseinrichtung ergibt sich, wenn das Motorgehäuse eine Seitenwandung aufweist, an der die Zahnradpumpe angeordnet ist, insbesondere diese eine Ausnehmung aufweist, in der die Zahnradpumpe zumindest teilweise oder ganz einliegt. Die Seitenwandung des Motorgehäuses kann dabei von einer mit dem Rotor drehfest verbundenen Welle durchgriffen sein, wobei das Zahnrad entweder drehfest mit der Welle verbunden ist oder über ein zwischengeschaltetes Getriebe und/oder einer Kupplung mit der Welle gekoppelt ist.

Eine vorteilhafte kompakte und integrierte Ausbildung der zuvor beschriebenen Druckversorgungseinrichtung erhält man, wenn der Anrieb mit seinem Gehäuse an einem Hydraulikgehäuse mit mindestens einem darin angeordneten Ventil und/oder Hydraulikleitungen bzw. -kanälen anliegt oder mit diesem eine Einheit bildet. Die Seitenwandung des Antriebsgehäuses kann dabei an der Seitenwandung des Hydraulikgehäuses anliegen bzw. anstoßen, insbesondere an dieser befestigt sein, wobei die, insbesondere topfförmige, Ausnehmung die Zahnradpumpe zumindest teilweise oder ganz aufnimmt und hin zum Hydraulikgehäuse geöffnet ist. Bei aneinander angeordneten Gehäusen kann die Zahnradpumpe entweder ganz in der Ausnehmung der Wandung des Antriebsgehäuses, ganz in einer Ausnehmung des Hydraulikgehäuses oder aber sowohl in einer Ausnehmung der Seitenwandung des Antriebsgehäuses als auch in einer Ausnehmung der Seitenwandung des Hydraulikgehäuses einliegen. Im letzteren Fall sind die Öffnungen der beiden Ausnehmungen dann zueinander zugewandt. Zusätzliche Dichtungen können dabei vorgesehen sein, um die beiden Gehäuse zueinander und nach außen hin abzudichten.

Die vorbeschriebene Ausnehmung in der Seitenwandung des Antriebsgehäuses ist dabei vorteilhaft nach außen hin, und sofern ein Hydraulikgehäuse vorhanden, zu diesem hin geöffnet. Die Ausnehmung kann selbst vorteilhaft topfförmig ausgebildet sein. Auch kann sie einen zylindrischen im Querschnitt kreisförmigen Abschnitt aufweisen, in dem die Zahnradpumpe mit ihren Zahnrädern einliegt.

Die Seitenwandung des Antriebsgehäuses kann zudem vorteilhaft als Flansch ausgebildet sein, mit dem der Antrieb an einem anderen Teil oder Aggregat befestigbar ist.

Die bei der erfindungsgemäßen Druckversorgungseinrichtung eingesetzte Zahnradpumpe kann eine Innenzahnradpumpe mit Sichel, eine Außenzahnradpumpe oder Zahnringpumpe sein.

Die Zahnradpumpe kann zudem vorteilhaft axial neben dem Stator und/oder dem Rotor des Antriebs angeordnet sein, ist deren Aufbau und Größe nicht durch die Zahnradpumpe nachteilig beschränkt. Auch ist die Zahnradpumpe dann in ihrer Größe und ihrem Aufbau nicht abhängig von den Abmessungen des Stators und des Rotors.

Das Antriebsgehäuse kann mindestens zweiteilig ausgebildet sein, wobei die Seitenwandung Teil eines ersten Gehäuseteils ist oder dieses bildet. Das zweite Gehäuseteil kann z.B. topfförmig ausgebildet sein und den Stator und den Rotor des Antriebs aufnehmen.

Der Rotor ist, wie bereits ausgeführt, mit dem Zahnrad mittels einer Antriebswelle direkt oder über ein Getriebe und/oder eine Kupplung verbunden. Dabei kann das Zahnrad entweder mittels einer kraftschlüssigen Verbindung oder mittels eines Formschlusses, welcher insbesondere mittels eines Stifts oder Kerbverzahnung gebildet ist, mit der Antriebswelle drehfest verbunden sein. Bei der Zahnringpumpe ist das innere Zahnrad exzentrisch auf einem mit der Antriebswelle verbundenem Teil, insbesondere in Form einer Scheibe oder einer Nockenscheibe, angeordnet.

Sowohl bei der Ausbildung der Zahnradpumpe der erfindungsgemäßen Druckversorgungseinrichtung als Innenzahnradpumpe oder als Zahnringpumpe, ist zu dem inneren Zahnrad auch noch ein äußerer Innenzahnkranz notwendig. Der Innenzahnkranz wird bei der Innenzahnradpumpe mittels des von der Antriebswelle angetriebenen inneren Zahnrades um seine Drehachse verdreht, wobei das innere Zahnrad exzentrisch zu dem Innenzahnkranz angeordnet ist. Der Innenzahnkranz dreht sich dabei in einem äußeren, ihn umgebenden Ring oder Zylinder. Zusätzlich ist noch eine Sichel vorzusehen, welche in dem sich durch die Exzentrizität ergebenden Raum zwischen Innenzahnkranz und innerem Zahnrad angeordnet sein muss.

Im Gegensatz zur Innenzahnradpumpe ist bei der Zahnringpumpe der Innenzahnkranz fest angeordnet, wobei das innere Zahnrad aufgrund seiner exzentrischen Lagerung auf der von der Antriebswelle gedrehten Scheibe in dem Innenzahnkranz abrollt. Eine Sichel wie bei der Innenzahnradpumpe ist nicht erforderlich.

Die Antriebswelle kann erfindungsgemäß entweder

    a) im Motorgehäuse einerseits, sowie in der Zahnradpumpe und/oder im Hydraulikgehäuse andererseits oder

    b) nur in der Zahnradpumpe oder

    c) im Hydraulikgehäuse und im Motorgehäuse oder

    d) in der Zahnradpumpe und im Hydraulikgehäuse

abgestützt bzw. mittels geeigneter Lager, insbesondere Radiallager, in Form von Kugel- oder Rollenlagern, und/oder Axiallagern, gelagert sein.

Sofern ein Hydraulikgehäuse vorgesehen ist, so kann sich die Antriebswelle bis in das Hydraulikgehäuse hinein erstrecken, insbesondere bis zu dessen dem Antrieb gegenüberliegender Seite. So kann an der Antriebswelle ein Target für einen Sensor angeordnet sein, wobei der Sensor in der Steuer- und Regeleinheit (ECU) angeordnet ist. Dabei können zusätzliche Dichtungen verhindern, dass das geförderte Medium in die Steuer- und Regeleinheit gelangt. Es ist auch möglich, dass sich die Antriebswelle durch das Hydraulikgehäuse ganz hindurch erstreckt und in dem sich daran anschließenden Gehäuse, z.B. einer Steuer- und Regeleinheit, endet.

Die Zahnradpumpe als Innenzahnradpumpe kann unterschiedlich ausgebildet sein. So können in einer ersten Ausführung das innere Zahnrad, der Innenzahnkranz, die Sichel und der Außenring zwischen zwei Scheiben angeordnet sein, wobei nach entsprechender Zentrierung und Justierung der Teile zueinander die Scheiben mit dem Außenring stoffschlüssig verbunden werden. Dabei kann sich die stoffschlüssige Verbindung ganz um den Umfang herum erstrecken, so dass sich eine stabile und kompakte Ausführungsform ergibt, bei der die einzelnen sich bewegenden Teile nur kleine Spiele und Spalte zueinander aufweisen, wodurch ein guter Wirkungsgrad erreicht wird und ein hoher Druck erzielbar ist.

Nachfolgend werden mögliche Ausführungsformen des erfindungsgemäßen Bremssystems anhand von Zeichnungen näher erläutert.

Es zeigen:

Fig. 1:    Eine schematische Darstellung einer ersten Ausführungsform der erfinderischen E-Achse mit einer oder zwei redundanten Druckversorgungseinrichtung(en) DV1-A1 (DV2-A2), einem Elektromotor EM zum Antrieb einer Achse, elektrohydraulischer Servolenkung EHPS, elektrischer Parkbremse und Hydraulikkontrolleinheit HCU sowie zugeordneten Steuerelektronik der Aggregate;

Fig. 1a:    hydraulisches Prinzip Schaltbild einer ersten Ausführungsform der E-Achse gemäß Figur 1 mit elektrischer Parkbremse EPB und Variante 1 einer elektrohydraulischer Lenkung EHPS mit einer Druckversorgungseinrichtung;

Fig. 1b:    hydraulisches Prinzip Schaltbild einer zweiten möglichen Ausgestaltung des E-Achse gemäß Figur 1 mit elektromechanischer Bremse EMB statt elektrische Parkbremse und redundanter Druckversorgungseinrichtung und Variante 2 einer elektrohydraulischer Lenkung EHPS mit einer separaten redundanter Druckversorgungseinrichtung;

Fig. 1c:    hydraulisches Prinzip Schaltbild einer zweiten möglichen Ausgestaltung des E-Achse gemäß Figur 1 mit elektrische Parkbremse EPB und redundanter Druckversorgungseinrichtung für Bremsbetätigung und separater redundanter Druckversorgungseinrichtung für Lenkungsbetätigung;

Fig. 2:    eine schematische Darstellung einer zweiten Ausführungsform der erfinderischen E-Achse mit einer Druckversorgungseinrichtungen, einer Hydraulikkontrolleinheit HCU, je einem Antriebsmotoren pro Rad sowie einer hydraulisch unterstützten elektrischen Bremse H-EMB sowie zugeordnete Steuerelektronik für die Aggregate;

Fig. 2a    hydraulisches Prinzip Schaltbild der zweiten möglichen Ausgestaltung des E-Achse gemäß Figur 2;

Fig. 2b:    Querschnittsdarstellung durch eine hydraulisch unterstützte elektromechanische Bremse H-EMB für Einsatz in der zweiten möglichen Ausführungsform

Fig. 3:    eine schematische Darstellung einer dritten Ausführungsform der erfinderischen E-Achse mit einer oder zwei Druckversorgungseinrichtungen, einer Hydraulikkontrolleinheit HCU, einem elektrischen Antriebsmotoren EM sowie Schaltgetriebe SG mit Torque-Vektoring-Modul TV und Getriebesperre GS

Fig. 3a: hydraulisches Prinzip Schaltbild einer ersten Variante der E-Achse gemäß Figur 3 mit einer redundanten Druckversorgungseinrichtung;

Fig. 3b: hydraulisches Prinzip Schaltbild einer zweiten Variante der E-Achse gemäß Figur 3 mit einer Druckversorgungseinrichtung und Betätigungseinheit BE mit hydraulischer Verbindung an Achse 1 sowie Verbindungsmodul VM zu einer weiteren Druckversorgungseinrichtung an A2;

Fig. 3c: hydraulisches Prinzip Schaltbild einer dritten Variante der E-Achse gemäß Figur 3 mit einer Druckversorgungseinrichtung mit hydraulischer Verbindung an Achse 1 sowie Verbindungsmodul VM zu einer weiteren Druckversorgungseinrichtung an A2 und einem zentralen Vorratsbehälter

Fig. 3d: hydraulisches Prinzip Schaltbild einer vierten Variante der E-Achse gemäß Figur 3 mit je einer Druckversorgungseinheit für eine Radbremse und eine Kupplung eines Doppelkupplungsschaltgetriebes;

Fig. 3e: hydraulisches Prinzip Schaltbild einer fünften Variante der E-Achse gemäß Figur 3 mit einem Doppelhubkolben mit redundanter Elektronik für die Betätigung von Radbremsen und Doppelkupplungen;

Fig. 4: Druckversorgungseinrichtung mit zwei Steuer- und Regeleinrichtungen

Fig. 5: Druckversorgungseinrichtung in der Ausführung als Doppelhubkolben mit zwei Steuer- und Regeleinrichtungen, Ventilschaltung sowie redundanten Dichtungen mit Diagnosemöglichkeit der Ausfall einer Dichtung

Fig. 6: Bremsdruckregelung bei Ausfall des Druckgebers mittels Stromund Temperaturmessung und Auswertung der Druck-Volumen-Kennlinie;

Fig. 7: Tabelle 1: E-Achs-Primärfunktion und Sekundärfunktion/ Redundanz;

Fig. 8a: Baueinheit bestehend aus Elektromotor 22, einkreisiger Rotationspumpe Z, HCU mit Magnetventilen und ECU

Fig. 8b: Baueinheit bestehend aus Elektromotor 22, zweikreisiger Rotationspumpe Z, HCU mit Magnetventilen und ECU

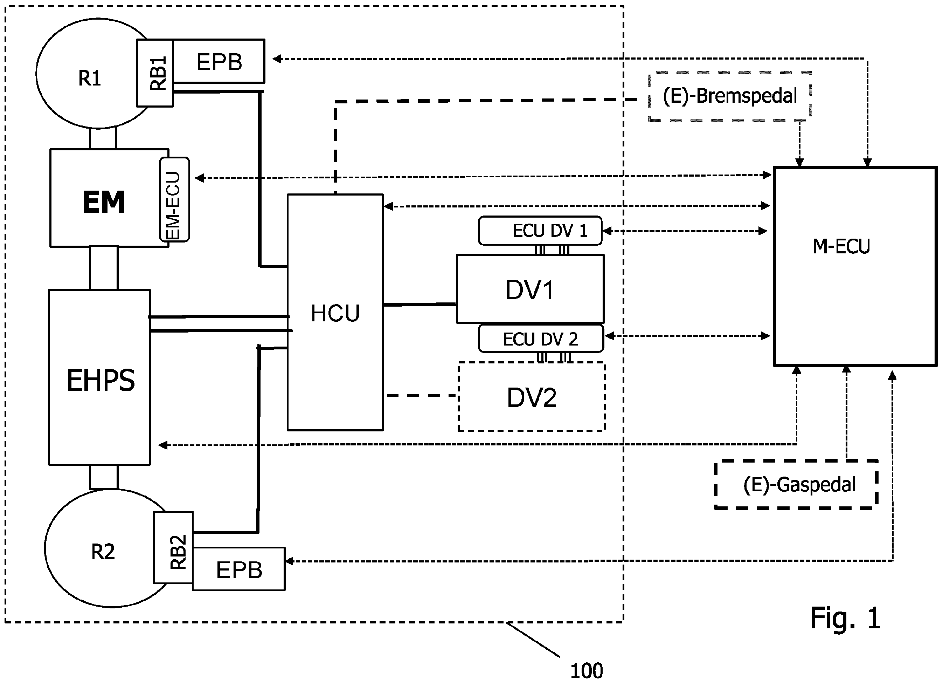

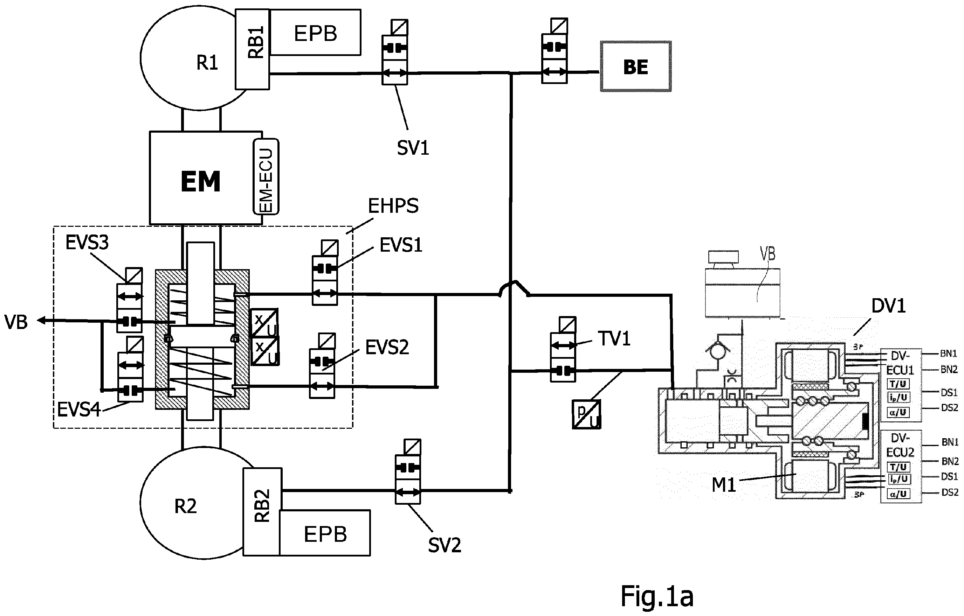

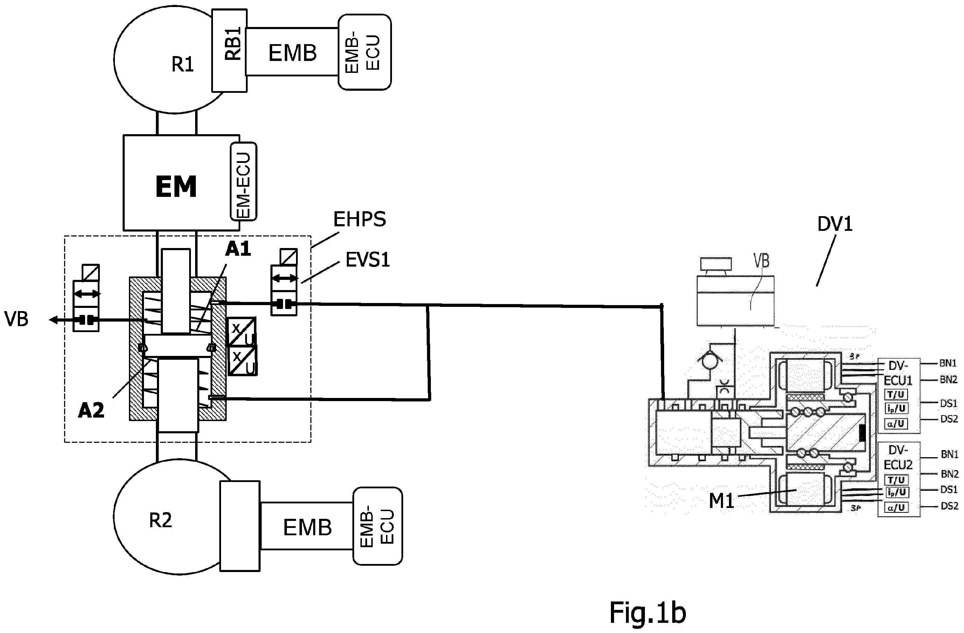

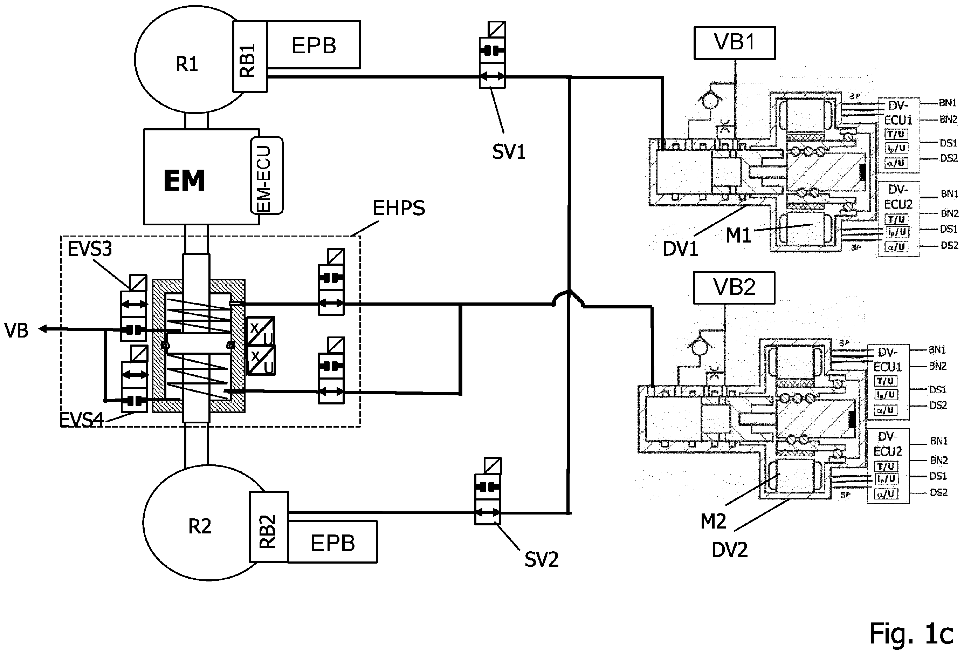

Die Figur 1 zeigt eine erste mögliche Ausführung der erfindungsgemäßen Fahrzeugachse 100 mit den Rädern R1 und R2, wobei jedes Rad mittels einer herkömmlichen Radbremse RB1, RB2 gebremst wird und zusätzlich noch eine Parkbremse EPB aufweist. Die Fahrzeugachse 100 verfügt zudem über einen Elektromotor EM mit Steuerung EM-ECU zum Antrieb der Achse, sowie eine elektrohydraulische Servolenkung EHPS. Zusätzlich weist die Fahrzeugachse in einer ersten Ausbauvariante eine Druckversorgungseinrichtung DV1 auf, die zusammen mit der Ventilanordnung HCU die Druckregelung in den Radbremsen RB1 und RB2 im Multiplexverfahren und/oder PPC-Verfahren vornimmt. Die Druckversorgungseinrichtung DV1 wird von einer Steuer- und Regeleinheit ECU DV1 gesteuert, wobei diese mittels zwei voneinander getrennten Phasensystemen, insbesondere 2x3 Phasen, den elektrischen Antriebsmotor der Druckversorgungseinrichtung DV1 ansteuert. Sollte eines der zwei Phasen- bzw. Wicklungssysteme ausfallen, so kann der Antriebsmotor noch mit verminderter Leistung weiter betrieben werden, so dass es nicht zu einem Totalausfall der Druckversorgungseinrichtung DV1 kommt. Sofern eine weitere Redundanz geschaffen werden soll, so kann dies durch das Vorsehen einer zweiten Druckversorgungseinrichtung DV2 erfolgen, welche ebenfalls über eine Steuer- und Regeleinrichtung ECU DV2 angesteuert und ebenfalls zur Erhöhung der Ausfallsicherheit über zwei Wicklungs- bzw. Phasensysteme verfügen kann. Die Druckversorgung bzw. -regelung der elektrohydraulischen Servolenkung EHPS erfolgt ebenfalls durch die Druckversorgungseinrichtung, wobei mittels der Ventilanordnung HCU diese getrennt von der Druckregelung in den Radbremsen erfolgt. Sollte gleichzeitig zum Bremsvorgang auch noch eine unterstützte Lenkung erforderlich sein, so können die Radbremsen RB1 und RB2 zusammen mit der Lenkung im Multiplexbetrieb versorgt werden. Sofern zwei Druckversorgungseinrichtungen DV1 und DV2 vorgesehen sein, so hat auch die Lenkung zwei redundante Druckversorgungeinrichtungen.

Die mit 100 gekennzeichnete gestrichelte Linie bildet die Systemgrenze der erfindungsgemäßen Fahrzeugachse.

Die Ventilanordnung kann, wie in Figur 1a dargestellt ausgebildet sein, wobei jeder Radbremse RB1, RB2 jeweils ein Schaltventil SV1, SV2 zugeordnet ist. Bei geöffnetem Schaltventil SV1, SV2 kann der Druck in der jeweiligen Radbremse RB1, RB2 mittels der Druckversorgungseinrichtung V1 eingeregelt werden, wobei bei geschlossenem Schaltventil Sv1, SV2 der Druck in der jeweiligen Radbremse RB1, RB2 eingeschlossen bzw. eingefroren wird. Es ist optional möglich, zumindest bei einer Radbremse ein Auslassventil vorzusehen, so dass der Druck in dieser Radbremse über das Auslassventil abbaubar ist. Bei geschlossenem zugehörigem Schaltventil kann dann gleichzeitig mittels der Druckversorgungseinrichtung der Druck in der anderen Radbremse aufgebaut werden.

Sollte die Druckversorgungseinrichtung ganz oder teilweise ausfallen, so kann ersatzweise oder zusätzlich mit den Parkbremsen EPB und/oder mittels des Elektroantriebes EM ein Bremsmoment erzeugt werden.

Beim Vorsehen einer nicht dargestellten Betätigungseinrichtung BE, wie sie in Figur 1a schematisch dargestellt ist, welche über eine Kolben-Zylinder-Einheit verfügt, deren Kolben mittels des Bremspedals der Betätigungseinrichtung BE verstellbar ist, kann im Notfall ein Bremsdruck in den Radbremsen RB1, RB2 aufgebaut werden. Für diesen Fall muss der Druckversorgungseinrichtung ein Trennventil TV1 vorgeschaltet werden, welches stromlos geschlossen ist, wodurch die Druckversorgungseinrichtung DV1 von den Radbremsen RB1, RB2 und der Betätigungseinrichtung BE getrennt ist.

Die Druckregelung in den Radbremsen erfolgt über den Druckgeber p/U und ergänzend über das PPC-Verfahren mit Wegsteuerung des Kolbens der Druckversorgungseinrichtung DV1, sowie ergänzend oder bei Ausfall des Druckgebers über den Motorstrom und Druckvolumenkennlinie des Systems. Die Druckregelung in der Lenkung EHPS erfolgt über die Volumensteuerung durch Wegsteuerung des Kolbens der Kolben-Zylinder-Einheit der Lenkung EHPS, wozu die Lenkung zumindest einen, vorteilhaft noch einen zusätzlichen vorzugsweise redundanten, Weggeber x/U aufweist, siehe Figur 1a. Als Alternative zum Weggeber kann auch der Winkelgeber $\alpha$/U des Elektromotors der Druckversorgungseinrichtung verwendet werden, der auch redundant ausgeführt ist.

Sämtliche Komponenten der Fahrzeugachse werden von der übergeordneten Steuer- und Regeleinheit M-ECU gesteuert. Optional kann anstelle einer Betätigungseinrichtung BE auch ein elektrisches Bremspedal für Brake-by-wire sowie ein elektrisches Gaspedal E-Gaspedal vorgesehen werden.

Die Figur 1a zeigt einen Hydraulikplan der Fahrzeugachse gemäß Figur 1 mit nur einer Druckversorgungseinrichtung DV1, wobei diese zwei Steuer- und Regeleinheiten DV-ECU1 und DV-ECU2 aufweist, wobei jede Steuer- und Regeleinheit jeweils ein 3-Wicklungssystem des Antriebes ansteuert, so dass auch beim Ausfall einer Steuer- und Regeleinheiten oder eines 3-Wicklungssystems die Druckversorgung mit verminderter Dynamik und verkleinertem Maximaldruck betrieben werden kann.

Die Lenkung EHPS weist für jede Druckkammer ein Einlassventil EVS1, EVS2, EVS3, EVS4 auf, wobei durch Öffnen der Schaltventile der Kolben zur Lenkungsunterstützung verstellbar ist. Die EHPS-Steuerung folgt derart, dass zur Verschiebung des Kolbens in Richtung Rad R2 das EVS1-Ventil und das EVS4-Ventil geöffnet wird, während EVS2 und EVS4 geschlossen sind. Bei einer Verstellung in Richtung Rad R1 wird das EVS2 und EVS3-Ventil geöffnet und EVS1, EVS4-Ventil geöffnet. Bei Leckage der Ventile kann die Lenkung mittels eines Notsteuerverfahrens derart gesteuert werden, dass die Leckageraten über den Kolben der Druckversorgungseinrichtung ermittelt werden und die Ventile intelligent angesteuert werden, dass trotz Leckage eine Lenkung in beide Richtungen möglich ist. Für weitere Redundanz sind Lenkungsmodule an mehreren Achsen vorgesehen.

Die Figur 1b zeigt eine zur Fahrzeugachse gemäß Figur 1a weitere Ausführungsform, wobei eine reine elektrohydraulische Bremse vorgesehen ist und die Druckversorgungseinrichtung nur mit dem Lenkungsmodul verbunden ist. Im Unterschied zur Lenkung gemäß Figur 1a weist die Lenkung EHPS lediglich ein Schaltventil EVS1 auf.

Die Figur 1c zeigt eine weitere mögliche Ausführungsform der erfindungsgemäßen Fahrzeugachse, bei der zwei Druckversorgungseinrichtungen DV1 und DV2 vorgesehen sind, die jeweils zwei Steuer- und Regeleinheiten DV-ECU1 und DV-ECU2 aufweisen. Jede Steuer- und Regeleinheit DV-ECU1 und DV-ECU2 steuert ein eigenes Phasen- bzw. Wicklungssystem des Motors M1, M2 an, so dass die Steuer- und Regeleinheiten in sich redundant ausgelegt sind. Zudem können weitere Redundanzen vorgesehen werden, wenn die Spannungsversorgung und/oder die Signalleitungen für die Steuer- und Regeleinheiten DV-ECU1 und DV-ECU2 redundante ausgelegt werden, d.h. es wird eine Versorgung aus zwei Bordnetzen und/oder zwei Spannungsebenen BN1, BN2 vorgesehen bzw. die Datenleitungen DS1, DS2 redundant ausgelegt.

Die Druckversorgungseinrichtung DV1 ist dabei für die Druckregelung in den Radbremsen RB1 und RB2 vorgesehen. Die Druckversorgungseinrichtung DV2 für die Druckregelung bzw. Druckversorgung der Lenkung EHPS. Die beiden Hydrauliksysteme sind dabei voneinander getrennt, so dass sich ein Fehler in einem System nicht auf das andere auswirken kann. Die Funktionsweise der Lenkung ist in Figur 1a beschrieben.

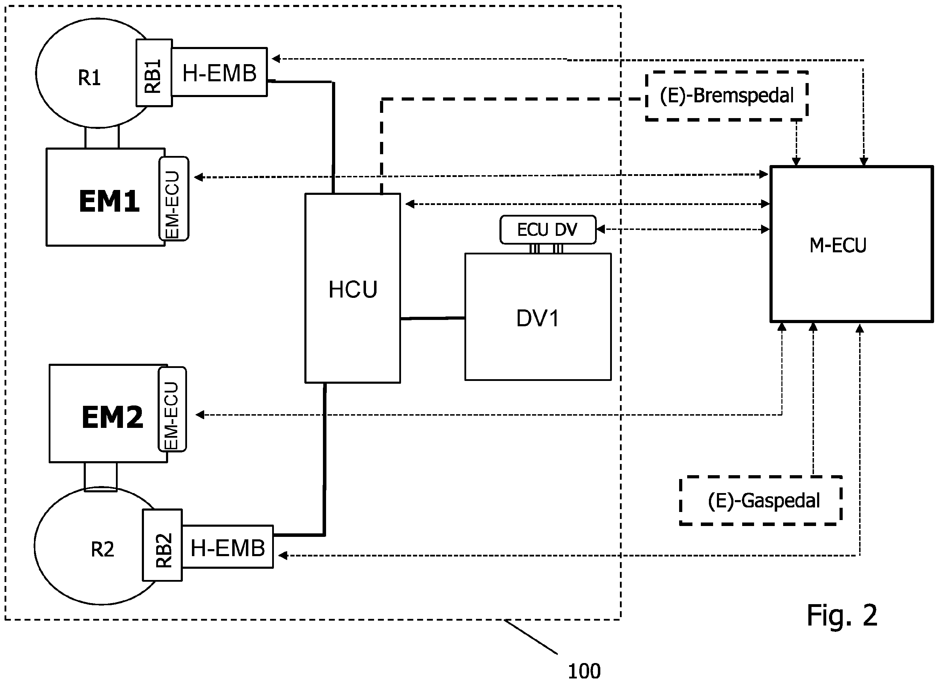

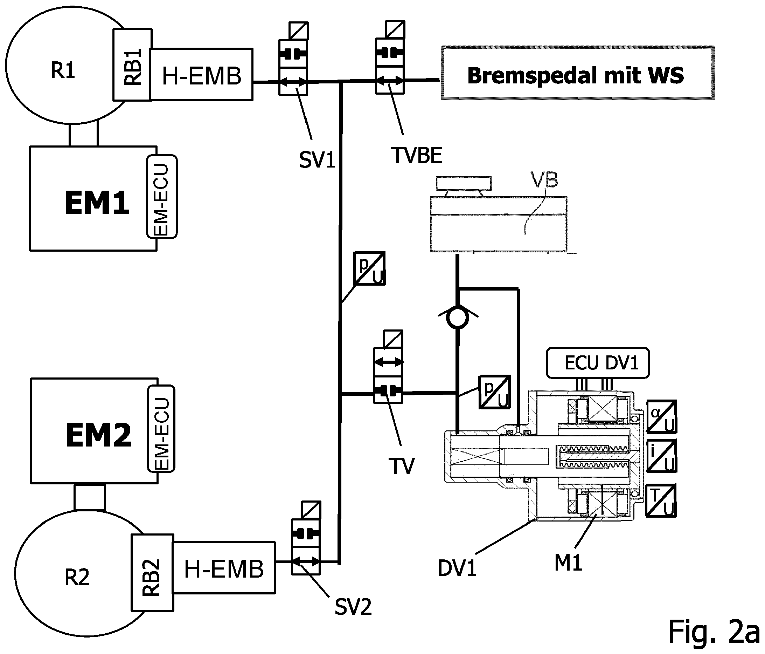

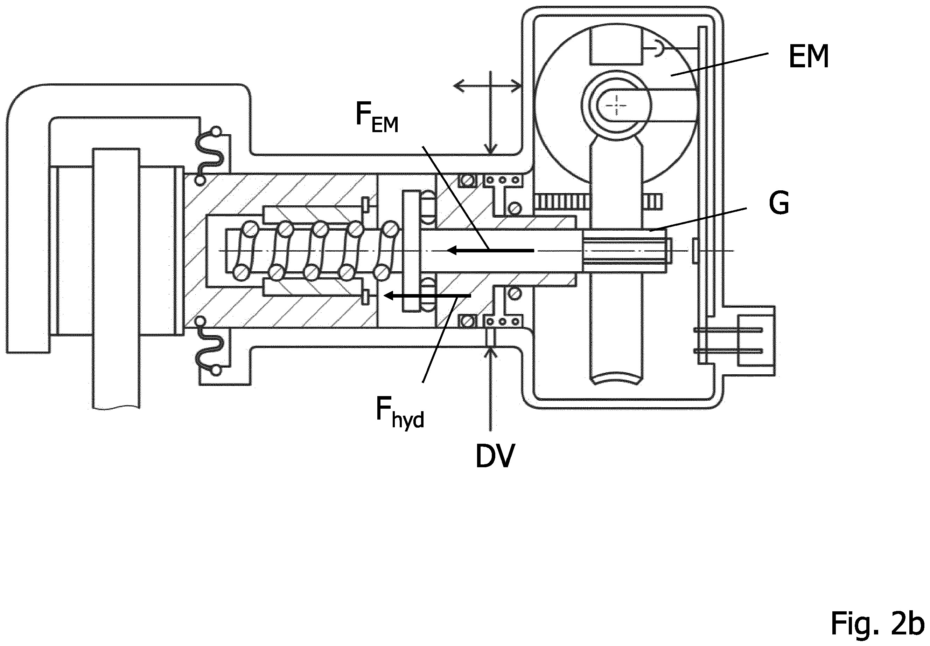

Die Figur 2 zeigt ein Prinzipschaltbild einer zweiten möglichen Ausgestaltung der Fahrzeugachse 100. Dabei sind die Radbremsen RB1 und RB2 der Achse 100 durch hydraulisch unterstützte elektromechanische Bremsen H-EMB gebildet, mit denen im Regelbetrieb nicht nur mittels der Druckversorgungseinrichtung DV1 sondern auch mittels des eigenen Elektroantriebes eine Bremskraft aufbaubar werden kann. Diese kann unterstützend oder bei Totalausfall genutzt werden. Zudem kann noch mittels der Traktionsantriebe EM1 und EM2 eine Verzögerung der Fahrzeugräder R1 und R2 unterstützend oder allein generiert werden. Die Steuer- und Regeleinheit ECU DV kann identisch ausgelegt sein, wie die in den zuvor beschriebenen Ausführungsformen. D.h. sie kann in sich redundant ausgelegt werden. Optional kann auch noch eine zweite Druckversorgungseinrichtung als Ersatz im Notfall für die Druckversorgungseinrichtung DV1 vorgesehen werden. Gesteuert werden die Komponenten von der übergeordneten Steuer- und Regeleinheit M-ECU, wobei wie zuvor schon beschrieben eine Betätigungseinheit BE optional vorgesehen werden kann. Diese kann entweder ein rein elektronisches Bremspedal (E-Bremspedal) aufweisen, oder verfügt über eine Kolben-Zylinder-Einheit, deren Kolben zum Druckaufbau in den Radbremsen mittels des Bremspedals im Notfall verstellt werden kann, so dass noch eine Notbremsung möglich ist. Diese kann per Fuß erzeugte Bremskraft kann noch unterstützt werden durch die Traktionsmotoren EM1, EM2 sowie die Motoren der hydraulisch unterstützten Bremsen H-EMB.

Selbstverständlich kann auch bei dieser Ausführungsform noch eine Lenkung EHPS und/oder Kupplungs- und Gangsteller an der Achse vorgesehen werden, wie sie in den nachfolgenden Figuren noch beschrieben werden. Auch kann noch eine weitere Druckversorgungseinrichtung (nicht dargestellt) vorgesehen werden, die zur redundanten Druckversorgung der Radbremsen H-EMB und/oder zur Druckversorgung der weiteren Komponenten wie Lenkung EHPS und/oder Kupplungs- und Gangsteller dient. Auch können die Druckversorgungseinrichtungen im Fehlerfalle einer Druckversorgungseinrichtung die Versorgung sämtlicher Komponenten der Fahrzeugachse übernehmen.

Die Figur 2a zeigt den hydraulischen Leitungen und Ventile der Fahrzeugachse, wie sie in Figur 2 dargestellt und beschrieben ist. Im Regelbetrieb ist das stromlos geschlossene Trennventil TV geöffnet, wobei die Druckregelung in den Radbremsen RB1, RB2 im Multiplexbetrieb und/oder gleichzeitig mittels der Druckversorgungseinrichtung DV1 und der Schaltventile SV1, SV2 erfolgt. Die Druckregelung kann dabei über die Druckmessung mittels des Druckgebers p/U erfolgen. Unterstützend oder bei Ausfalls des Druckgebers kann jedoch auch der Motorstrom i des Motors M1 sowie die Rotorposition $\alpha$ und optional die Temperatur des Motors sowie der Druck-Volumen-Kennlinie erfolgen. Bei einem Totalausfall der Druckversorgungseinrichtung DV1 schließt das Trennventil TV und öffnet sich das stromlos offene Trennventil TVBE, so dass mittels der Betätigungseinrichtung BE ein Druck in den Radbremsen aufbaubar ist.

Die Figur 2b zeigt eine Querschnittsdarstellung durch eine hydraulisch unterstützte elektromechanische Bremse H-EMB, welche über einen Hydraulikanschluss HL-DV1 mit der Druckversorgungseinrichtung DV1 verbindbar ist, so dass entweder über die Hydraulik und/oder den Elektromotor EM eine Kraft auf die Bremsscheiben aufbringbar ist. Die rotatorische Bewegung des Elektromotors wird hierbei über ein Getriebe G in eine lineare Bewegung übertragen und erzeugt die Kraft $F_{EM}$ auf die Radbremse. Das Getriebe G ist vorzugsweise selbsthemmend ausgeführt, so dass im Stillstand bei Ausfall des Bordnetzes die Parkbremse sicher funktioniert. Zusätzlich zum Elektromotor wird über die Druckversorgung eine hydraulische Kraft $F_{hyd}$ erzeugt. Je nach Ausführung des EM als Bürstenmotor oder bürstenloser Motor mit geringer oder höherer Leistung, kann die Dynamik der Bremsmomentänderung und das zusätzlich verfügbare Bremsmoment durch die H-EMB durch entsprechende Gestaltung der Komponenten festgelegt werden und auf die hydraulische Bremse abgestimmt werden.

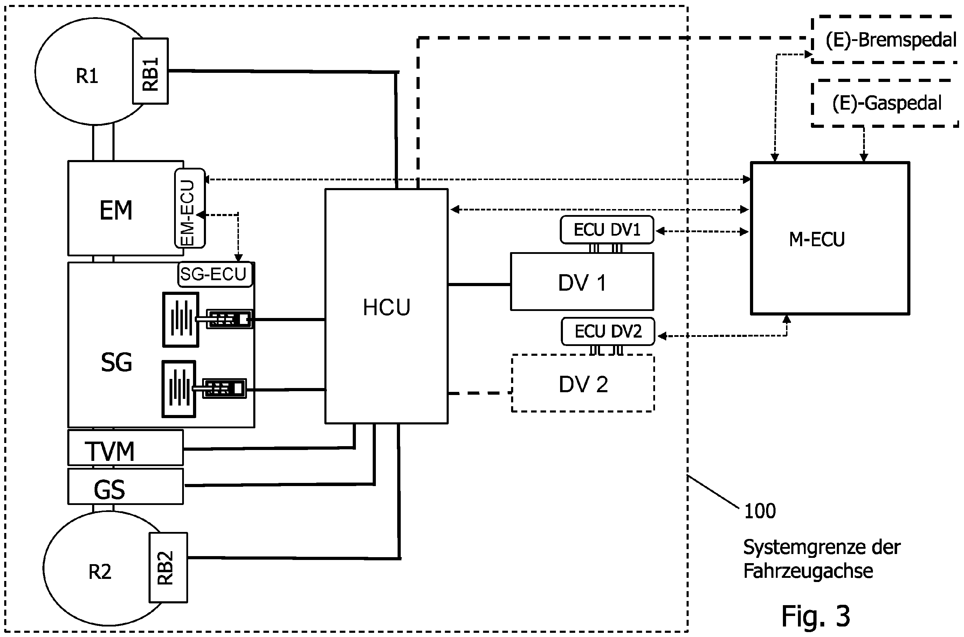

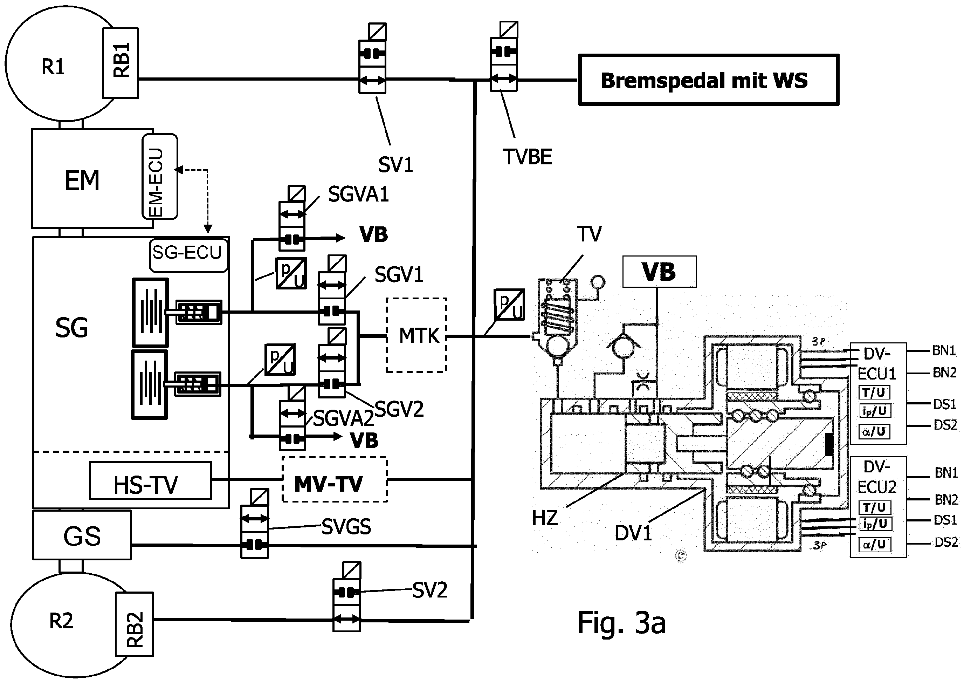

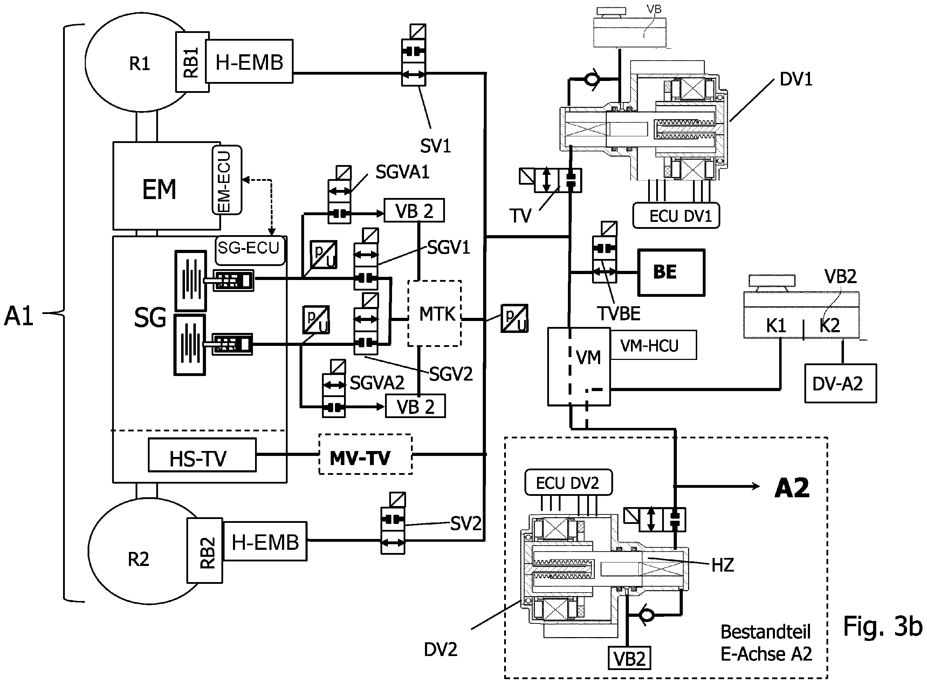

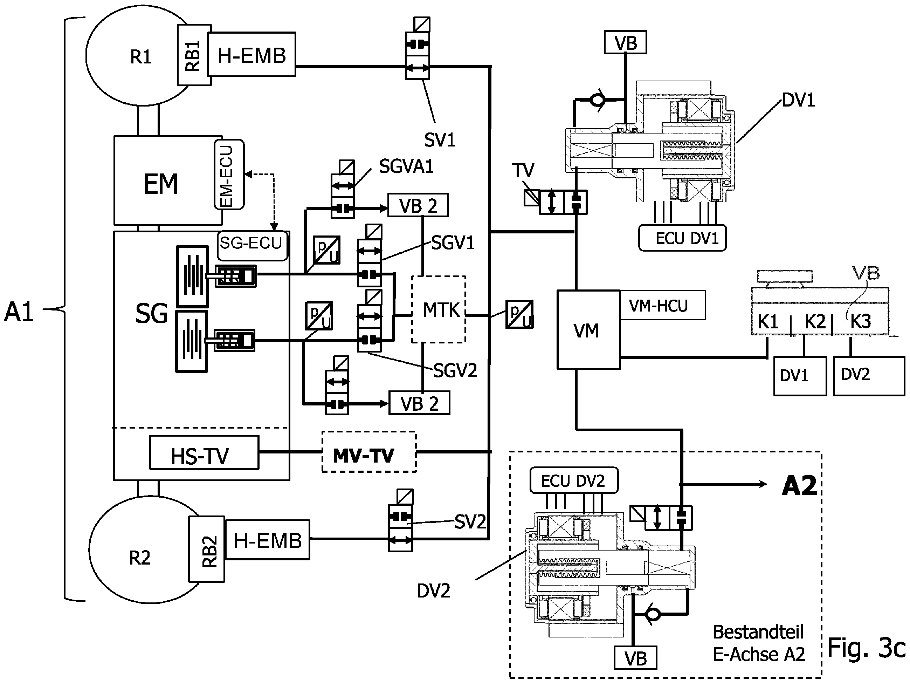

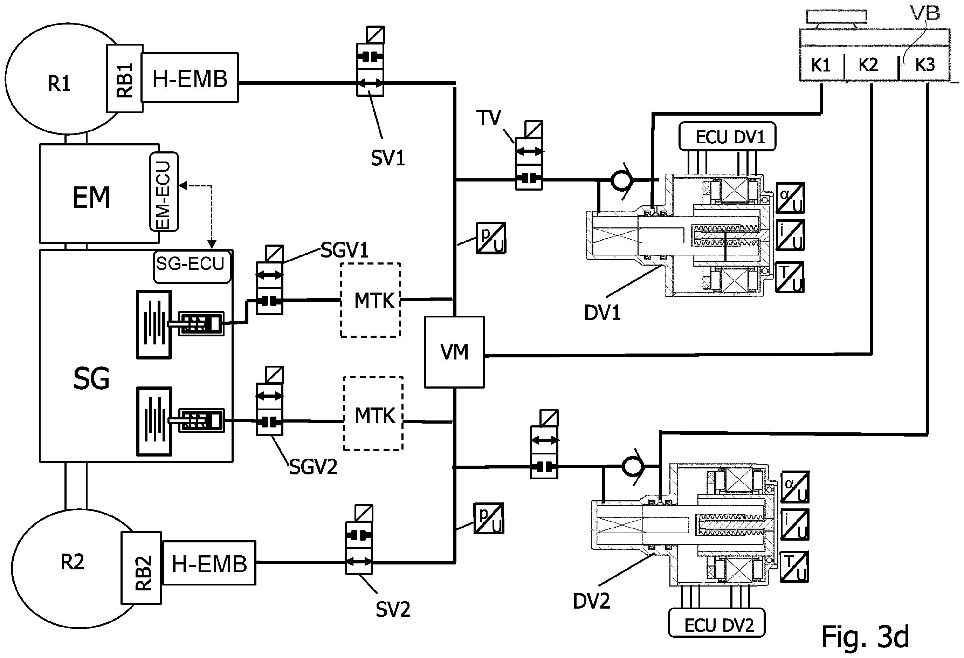

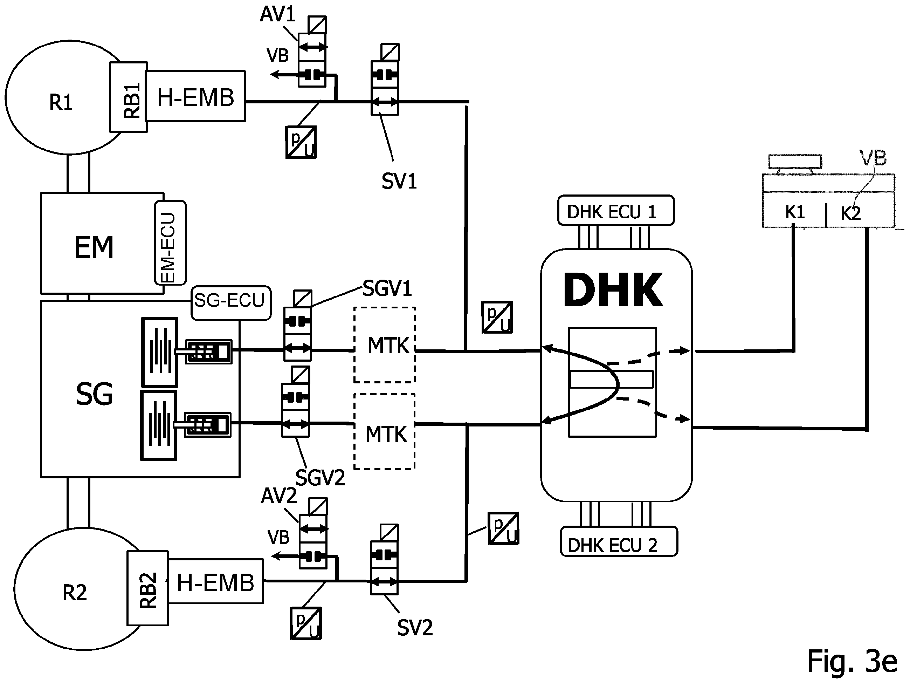

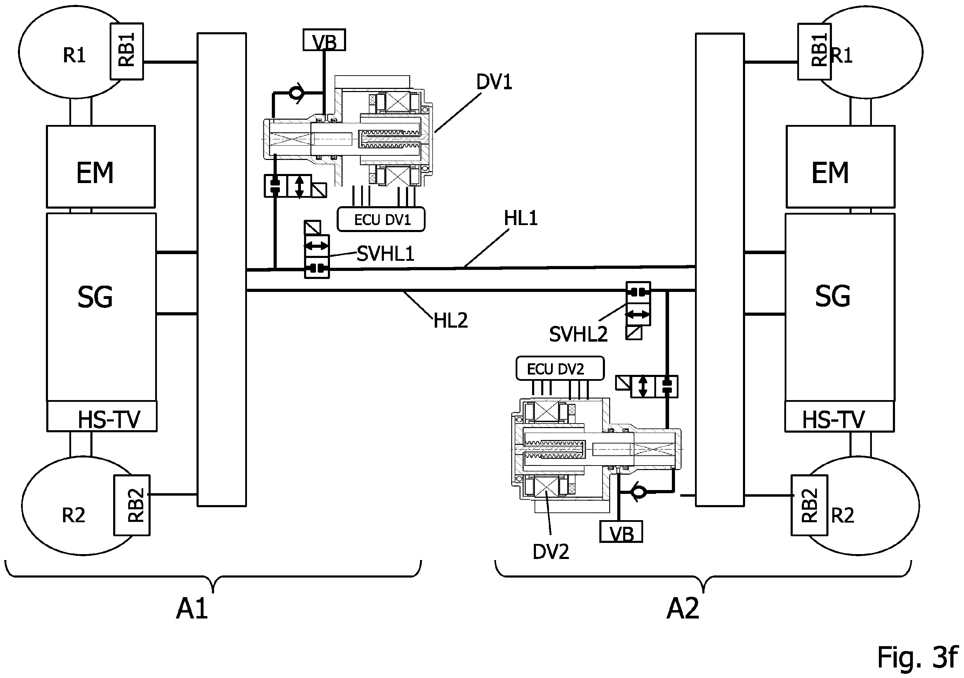

Die Figur 3 zeigt eine weitere mögliche Ausführungsform einer erfindungsgemäßen Fahrzeugachse, welche folgende Merkmale aufweist:

- Doppelkupplungsgetriebe (insbesondere 2-Gang für E-Fahrzeuge),
- Zusätzliches Torque Vektoring Modul TVM, z.B. Lösung eTwinster-x von GKN®, im 2-Gang Getriebe integriertes oder separates Modul;
- Torque-Vektoring kann unterschiedlich technisch gelöst werden, es ist auch möglich, dass das Torque Vektoring Modul TVM ein Teil vom Schaltgetriebe ist;
- Getriebesperre GS als Alternative zur Parkbremse; hierdurch ergibt sich eine Redundanz durch Druckversorgung mit eingesperrten Druck durch geschlossenes Schaltventil SV (siehe hydraulische Parkbremse - EP 2137427 A1), sowie zusätzlich durch Elektromotor EM, welcher eine bestimmte Zeit genutzt werden kann, da E-Fahrzeuge sehr große Batteriekapazität haben;
- Schaltgetriebe kann auch AMT sein (PCT/EP2017/054643)

Bei der in Figur 3 dargestellten Fahrzeugachse erfolgt die Druckversorgung bzw. -regelung in den Radbremsen R1, R2 und des Antriebsstranges: a) Schaltgetriebe SG, b) Torque Vectoring TVM, Getriebesperre GS mittels der Druckversorgungseinrichtung DV1. Optional kann eine zweite Druckversorgungseinrichtung DV2 zur Erhöhung der Ausfallsicherheit der Komponenten vorgesehen werden.

Das Bremspedal und das E-Gaspedal liefern die Eingangssignale für die übergeordnete Steuer- und Regeleinheit M-ECU. Die Ventilanordnung HCU mit den nicht dargestellten Ventilen regelt die Ansteuerung der einzelnen Komponenten.

Das Bremspedal kann als reines E-Bremspedal ausgeführt werden und liefert somit lediglich Sensorsignale. Optional ist es auch möglich eine Betätigungseinrichtung BE mit einem Bremspedal und z.B. mit Geberzylinder und hydraulischem Simulator vorzusehen, so dass es möglich ist eine hydraulische Verbindung zur HCU herzustellen. Hierdurch ergibt sich vorteilhaft eine Rückfallebene, in der der Fahrer direkt über das Bremspedal Bremsdruck in den Radbremsen erzeugen kann, wie es bereits zuvor beschrieben ist.

Der Motor in der Druckversorgungseinrichtung DV1 kann als 6-Phasenmotor ausgeführt sein, wobei jeweils zwei voneinander getrennte Endstufen, welche je die halben Motorwicklungen bestromen, vorgesehen sind. Somit kann bei Ausfall einer Endstufe ECU-DV1 noch 50% der gesamten Motorleistung bereitgestellt werden.

Das Schaltgetriebe SG kann mittels zwei hydraulisch betätigten Lamellenkupplungen aktuiert werden. Es sind aber auch andere hydraulisch aktuierte Schaltelemente möglich, wie z.B. hydr. aktuierte Gangsteller, hydr. aktuierte Freiläufe, usw..

Vorteilhaft kommuniziert der Elektromotor EM teilweise direkt mit der Steuer- und Regeleinheit SG-ECU des Schaltgetriebes SG.

Alternativ kann auch noch eine Lenkung EHPS, wie sie bei den zuvor beschriebenen Ausführungsformen verwendet worden ist, bei der Fahrzeugachse gemäß Figur 3 vorgesehen werden.

Die Figur 3a zeigt eine mögliche Ausführungsform, bei der die Ventile der HCU gemäß Figur 3 dargestellt sind. Die stromlos offenen Schaltventile SV1, SV2 dienen dabei, wie bereits beschrieben für die Druckregelung in den Radbremsen. Der Druck-Aufbau und -Abbau erfolgt jeweils über das Schaltventil SV1, SV2, wobei die radindividuelle Druckregelung im Multiplexbetrieb (MUX) erfolgt.

Die Aktuierung der Kupplungen im Schaltgetriebe SG erfolgt über ein vorzugsweise stromlos geschlossene Ventile SGV1, SGSV2 zum Druckaufbau und ein stromlos geschlossenes Ventile SGVA1, SGVA2 zum Druckabbau. Die Druckregelung erfolgt wahlweise direkt über die Druckversorgungseinheit DV1. Alternativ kann aber auch durch hochfrequentes Takten der Ventile SGV1, SGSV2, SGVA1 und SGVA2 der Druck im Schaltgetriebe SG eingeregelt werden. Für die Druckregelung im Schaltgetriebe können zwei Druckgeber verwendet werden.

Die Aktuierung des Torque Vektoring HS-TV erfolgt über das Magnetventil MV-TV. Die Aktuierung der Gangsperre GS erfolgt über ein vorzugsweise stromlos geschlossenes Ventil SVGS.

Das Bremspedal mit Wegsimulator WS kann über das Magnetventil TVBE mit dem Hydraulikkreis der Fahrzeugachse verbunden werden.

Mittels des stromlos geschlossenen Ventils TV kann die Druckversorgungseinrichtung DV1 von den anderen Komponenten abgetrennt werden.

Die Redundanz der Motoransteuerung mittels der beiden Steuer- und Regeleinheiten DV-ECU1 und DV-ECU2 ist im Detail bereits bei den zuvor beschriebenen Ausführungsformen erläutert. Jede Teil-ECU steuert dabei drei Motorphasen an und erfasst die Signale Temperatur T, Phasenstrom i und Rotorwinkel $\alpha$. Bei Ausfall einer Teil-ECU kann die jeweils andere ECU alle Signale erfassen und den Motor mit ca. 50% Gesamtperformance ansteuern, was für die überwiegenden und relevanten Bremsmanöver ausreichend ist.

Die Figur 3b zeigt eine mögliche Ausführungsform eines Fahrzeugs mit zwei erfindungsgemäßen Fahrzeugachsen A1 und A2, welche jeweils von einer eigenen Druckversorgungseinrichtung DV1 und DV2 versorgt werden. Die Achse A2 ist nicht dargestellt. Das Verbindungsmodul VM ermöglicht es die beiden hydraulischen Kreise der beiden Achsen A1 und A2 miteinander zu verbinden. So kann bei Ausfall einer Druckversorgungseinrichtung die jeweils andere noch intakte Druckversorgungseinrichtung die Druckregelung für alle Komponenten des Fahrzeugs übernehmen, wodurch eine hohe Fehlersicherheit und Redundanz gegeben ist. Das Verbindungsmodul VM ermöglicht zusätzlich eine Verbindung zum Vorratsbehälter VB. Der innere Aufbau des Verbindungsmodul ist hier nicht im Detail weiter aufgeführt. Es ist aber in einer einfachen Ausgestaltung möglich, dass es mit lediglich drei Schaltventilen auskommt.

An den Radbremsen sind zusätzliche hydraulisch unterstützte Parkierbremsen H-EMB verbaut. Deren Funktion ist bereits in Figur 2 ausgiebig beschrieben.

Ein Vorratsbehälter VB versorgt die Druckversorgungseinrichtung DV1 mit Hydraulikflüssigkeit und es kann nachgefördert werden. Ein VB2 mit getrennten Kammern K1 und K2 versorgt die Druckversorgungseinrichtung DV2 mit Hydraulikflüssigkeit und es kann Druck über das Verbindungsmodul VM in den Vorratsbehälter abgelassen werden. Ein Druckablassen aus dem Hydraulikkreis der Achse A2 ist deshalb im Gegensatz zur Achse A1 erforderlich, weil Achse A2 keine Betätigungseinheit BE hat, welche typischerweise hydraulisch mit separatem Vorratsbehälter (nicht dargestellt) ausgeführt ist. Damit kann ein Überdruck im Hydraulikkreis der Achse A1 über die Betätigungseinheit BE entweichen. Die Betätigungseinheit BE ist über ein stromlos offenes Ventil TVBE mit dem Hydraulikkreis der Achse A1 verbunden, so dass bei Ausfall beider Druckversorgungseinrichtungen noch ein Druck in den Radbremsen der Achse A1 ein Bremsdruck aufbaubar ist.

Die Druckversorgung und Steuerung des Schaltgetriebes ist in Figur 3a ausführlich beschrieben. Es wird insofern auf die dortigen Ausführungen verwiesen. Als Unterschied zur Figur 3a ist eine Medientrennung MTK zwischen Bremskreis und Getriebekreis optional vorgesehen. Der optionale Medientrennkolben MTK ermöglicht es, dass zur Getriebeaktuierung ein unterschiedliches Medium als zur Bremsaktuierung verwendet werden kann. Daher ist ein separater Vorratsbehälter VB3 vorgehen, in den Volumen bei Kupplungsaktuierung abgelassen wird. Dieser Vorratsbehälter ist wiederum mit dem MTK-Modul verbunden.

Ein weitere Unterschied der Figur 3b zur Figur 3a ist, dass eine H-EMB eingesetzt wird. Diese Wirkungsweise ist in Figuren 2a und 2b ausführlich beschrieben. Zudem weitere Hydrauliksteller zum Torque Vektoring HS-TV vorgesehen, die über Magneteventil(e) MV-TV angesteuert werden. Das Torque-Vektoring Modul HS-TV kann im Getriebe integriert sein oder separat ausgeführt werden (siehe gestrichelt Linie)

Die Figur 3c zeigt eine weitere mögliche Ausführungsform, bei der keine Betätigungseinrichtung BE vorhanden ist. Dies entspricht einem Fahrzeugaufbau mit einem reinen E-Bremspedal für voll autonomes Fahren. Hier ist das Verbindungsmodul derart ausgeführt, dass ein Druckablassen aus den Hydraulickreisen beider Achsen A1 und A2 möglich in den Vorratsbeälter VB ist. Zudem sind die Druckversorgungen DV1 und DV2 mit dem Vorratsbehälter VB verbunden, wobei jeder Druckversorgung eine separate Kammer K2, K3 zugordnet ist. Beide Druckversorgungen können aus dem Kammern K2 und K3 nachfördern bzw. als Alternative auch über das VM-Modul über die Kammer K1 nachfördern. Hiermit ist eine weitere Redundanz geschaffen und es ist für alle Druckversorgungen nur ein Vorratsbehälter erforderlich.

Die Figur 3d zeigt eine weitere mögliche Ausführungsform einer Fahrzeugachse mit zwei Druckversorgungseinheiten DV1 und DV2. Je eine Druckversorgungseinrichtung DV1, DV2 steuert eine Radbremse RB1, RB2 sowie einen Teil der Schaltgetriebeaktuierung SG an. Die Radbremsen und Schaltgetriebeaktuierungen werden über vorzugsweise stromlos offene Magnetventile mit der jeweiligen Druckversorgungseinheit verbunden. Wahlweise kann mindestens ein Medientrennkolben MTK verbaut werden, so dass die Bremsen mit einem anderen Hydraulikmedium betrieben werden können als das Schaltgetriebe SG. Zum Aktuieren eine Radbremse wird das zugeordnete Schaltventil SV1, SV2 geöffnet und das Ventil der zugeordneten Getriebeaktuierung geschlossen. Zur Aktuierung des Getriebes SG erfolgt die Ventilschaltung umgekehrt. Das Bremsen hat dabei Priorität gegenüber dem Schalten des Schaltgetriebes SG.

Da bei einer Fahrzeugachse sehr selten geschaltet wird, kann man davon ausgehen, dass während der Druckmodulation beim Bremsen permanent die Druckversorgungseinrichtung mit der jeweiligen Radbremse verbunden ist. Schalten kann ggf. während Bremsphasen mit konstantem Druck oder im Anschluss an die Bremsung erfolgen.

Das Verbindungsmodul VM ermöglicht es, die beiden Hydraulikkreise zu verbinden. Ein gemeinsamer Vorratsbehälter VB mit getrennten Kammern K1, K2 und K3 versorgt die beiden Druckversorgungseinrichtungen DV1 und DV2. Zwar sind die Systemkosten gegenüber der Ausführungsform gemäß Figur 3b höher, dennoch überwiegen die folgenden Vorteile:

• Die beiden Druckversorgungseinrichtungen DV1 und DV2 stellen insgesamt eine Redundanz ohne Einschränkungen dar;

• Es gibt keine Einschränkungen in der Druckregelung in der Bremse, da Multiplexen, d.h. ein Versorgen zweier Radbremsen mit einer Druckversorgungseinrichtung, nicht notwendig ist. Der Bremsdruck kann permanent von der zugeordneten Druckversorgungseinrichtung DV1 bzw. DV2 bei offenem Schaltventil SV1 bzw. SV2 geregelt werden;

• Durch das Verbindungsmodul VM ist es bei Ausfall einer Druckversorgungseinrichtung DV1, DV2 möglich, beide Kreise mit der noch funktionsfähigen Druckversorgungseinrichtung zu bedienen. Dabei gibt es keine Einschränkungen im Druckniveau;

• An den Schaltelementen im Schaltgetriebe SG reicht je ein Schaltventil, zusätzlich sind keine Druckgeber notwendig;

• Das aktiv stellbare Volumen in der Druckversorgungseinrichtung kann etwas geringer ausfallen.

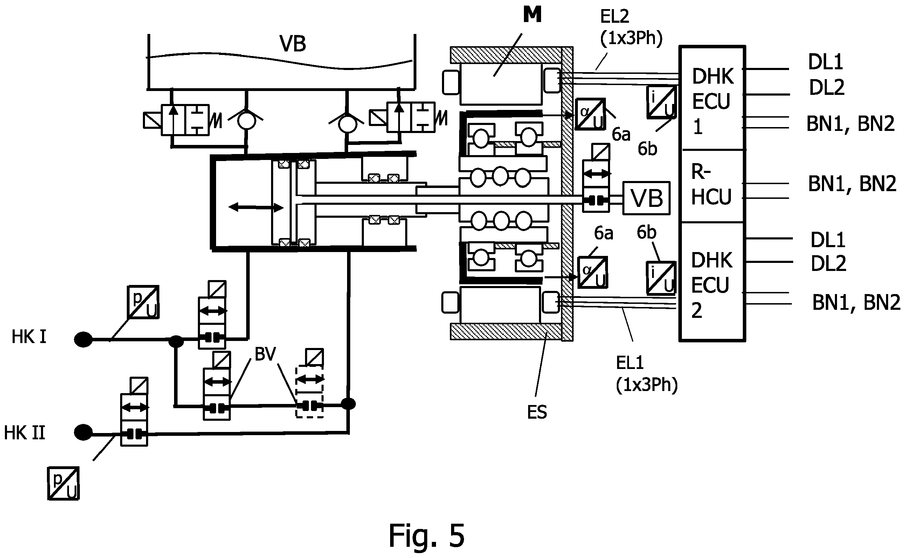

Die Figur 3e zeigt eine weitere mögliche Ausführungsform, bei der die Druckversorgungseinrichtung DV1 einen Doppelhubkolben DHK aufweist, der in Figur 5 detailliert dargestellt und beschrieben ist. Hier ist im Gegensatz zu den vorherigen Ausführung an jeder Radbremse ein Auslassventil AV1 und AV2 mit optionalen Druckgeber zwischen Schaltventil und Radbremse vorgesehen. Dieser hat verschiedene Vorteile:

- So ist eine Druckversorgung in beiden Kolbenhubbewegungen möglich, womit quasi ein unbegrenzter Volumenhaushalt zur Verfügung steht und ein kürzerer Kolbenhub möglich ist;

- Es besteht die Möglichkeit die beiden Hydraulikkreise wahlweise zu verbinden, aber auch zu trennen;

- gleichzeitiger Druckauf- und Abbau in einer Hubrichtung möglich, insbesondere vorteilhaft für die gleichzeitig Betätigung der beiden Kupplungen eines Doppelkupplungsgetriebes;

- Motordownsizing durch Verbindung der beiden Hydraulikkammern des Doppelhubkolbens und Reduzierung der Hydraulischen Wirkflächen mit Auswirkung auf Drehmomentbedarf des Elektromotors der Druckversorgungseinrichtung möglich;

- Geschlossene Kreise, d.h. die Gesamte Steuerung von Bremse und Kupplungen erfolgt über die DHK-Einheit und kann daher sehr gut diagonstiziert werden

- kein Verbindungsmodul VM notwendig.

- Verzicht bzw. Reduzierung Größe des Vorratsbehälter bei Medientrennung, da in der Kupplung wenig oder kein Volumen verloren geht

- Druckabbau über AV1, AV2 über PWM-Steuerung mit/ohne Druckgeber oder Doppelhubkolbendruckversorgungssystem in Vorratsbehälter VB, damit weitere Freiheitsgrade in der Drucksteuerung von Kupplungen und Bremse

Die Figur 3f zeigt eine Ausführungsform, für ein Fahrzeug mit zwei erfindungsgemäßen Fahrzeugachsen A1 und A2, deren Hydraulikkreise über zwei Hydraulikleitungen HL1 und HL2 mit je einem stromlos geschlossenen Ventil SVHL1, SVHL2 miteinander verbunden sind. An beiden Achsen A1 und A2 ist jeweils ein Elektromotor EM, ein Schaltgetriebe SG, Radbremsen RB und Torque Vectoring HS-TV installiert. Es ist auch möglich an der Achse A2 lediglich Radbremsen zu verbauen. Hierdurch ergeben sich folgende Vorteile:

- In der Regel werden die Ventile einer Druckversorgungseinrichtung DV1, DV2 durch die ECU der jeweiligen Achse angesteuert. Fällt aber diese ECU aus, so kann auch das Verbindungsventil nicht mehr angesteuert werden. Bei dieser Ausführungsform gibt es zwei Verbindungsventile SVHL1 und SVHL2, welche jeweils über die zugehörige ECU angesteuert werden. Somit ist auch bei Ausfall einer ECU noch gewährleistet, dass die beiden Hydraulikkreise verbunden werden können;

- falls nur eine Druckversorgungseinrichtung DV1, DV2 ausfällt, z.B. aufgrund einer klemmenden Spindel, aber die zugehörige ECU noch funktioniert, können beide Verbindungsventile geöffnet werden, sodass die Drosselverluste insgesamt geringer sind.

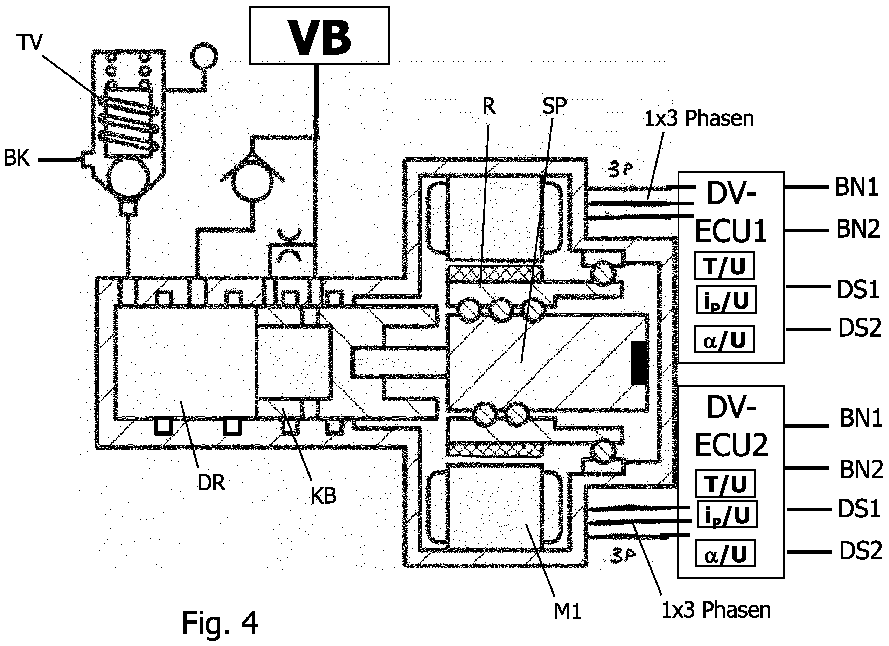

Die Figur 4 zeigt eine mögliche Ausführungsform einer Druckversorgungseinrichtung DV1 mit zwei Steuer- und Regeleinrichtungen DV-ECU1 und DV-ECU2. Die Druckversorgungseinrichtung weist einen Elektromotor M1 auf, dessen Rotor R eine Spindel SP verstellt, welche mit einem Kolben KB in Verbindung ist. Durch das Verstellen des Kolbens KB kann ein Druck im Druckraum DR aufgebaut werden, welche über das Trennventil TV in einen Bremskreis BK geleitet werden kann. Der Kolben ist über mehrere Dichtungen im Zylinder abgedichtet, wobei jeweils zwischen den Dichtungen eine Hydraulikleitung zum Vorratsbehälter führt. Somit ist die Druckversorgung auch bei Ausfall einer Dichtung noch voll betriebsfähig und redundant. Über ein Rückschlagventil ist der Druckraum DR mit dem Vorratsbehälter verbunden. Somit kann die Druckversorgung nachfördern. Jede der beiden Steuer- und Regeleinrichtungen DV-ECU1 und DV-ECU2 sind über 1x3 Phasenleitungen mit jeweils getrennten Wicklungs- bzw. Phasensystemen des Motors M1 in Verbindung, so dass bei Ausfall einer Steuer- und Regelungseinrichtung bzw. eines Wicklungssystem der Motor M1 noch über das andere Wicklungs- bzw. Phasensystem und die andere Steuer- und Regeleinrichtung betrieben werden kann, auch wenn dann nur noch ca. das halbe Drehmoment mittels des Antriebes M1 erzeugbar ist. Eine oder beide Steuer- und Regeleinrichtung(en) weist bzw. weisen Sensoren zur Ermittlung der Temperatur T, des Motorstroms i sowie des Rotorwinkels α auf. Zur Erzielung einer hohen Verfügbarkeit sind die nicht nur Steuer- und Regeleinrichtungen DV-ECU redundant ausgebildet, sondern auch Stromversorgungen BN1, BN2 sowie Daten- und Steuerleitungen DS1 und DS2 doppelt vorgesehen. Die Stromversorgungen BN1 und BN2 können z.B. unterschiedliche Spannungsniveaus eines Bordnetzes oder getrennte Bordnetze sein.

Die Figur 5 zeigt eine mögliche Ausführungsform einer Druckversorgungseinrichtung DV in der Ausführung als Doppelhubkolben mit 2 Druckräumen und unterschiedlichen Flächen A1 und A2, wobei das Flächenverhältnis A1/A2 vorzugsweise zwischen 1,5 und 2,5 liegt. Die DV weist zudem zwei Steuer- und Regeleinrichtungen DV-ECU1 und DV-ECU2. Die Druckversorgungseinrichtung weist einen Elektromotor M1 auf, dessen Rotor R eine Spindel SP verstellt, welche mit einem Kolben KB in Verbindung ist. Durch das Verstellen des Kolbens KB kann ein Druck im Druckraum DR aufgebaut werden, welche über das Trennventil TV in einen Bremskreis BK geleitet werden kann. Der Kolben ist über mehrere Dichtungen im Zylinder abgedichtet, wobei wie bei der Druckversorgungseinrichtung ein redundantes diagnostizierbares Dichtungssystem geschaffen wird. Auch bei der Druckversorgungseinrichtung führt zwischen den Dichtungen je eine Hydraulikleitung zum Vorratsbehälter. Somit sind die Dichtungen diagnostizierbar und die Druckversorgung auch bei Ausfall einer Dichtung noch voll betriebsfähig und redundant. Über Rückschlagventile und Ventile xx und xx sind due Druckraum DRx und DRx mit dem Vorratsbehälter verbunden. Damit kann die Druckversorgung aus in beide Druckräume Dxx und Dxx aus dem Vorratsbehälter Volumen beziehen und es ist ein kontrollierter Druckabbau über beide Druckräume in den Vorratsbehälter möglich. Der Druckabbau kann über Kolbensteuerung oder Ventilsteuerung, z.B. durch PWM-Taktung der Ventile erfolgen erfolgen. Zur Druckregelung werden vorteilhafterweise die Druckgeber p/u verwendet, es kann zusätzlich oder alternativ die PPC-Regelung eingesetzt werden. Die beiden Hydraulikkreise HKI und HK II sind über ein oder mehrere Bypassventil(e) verbunden, die vorzugsweise stromlos geschlossen ausgeführt sind. Somit kann der Druckaufbau in HK1 und HK2 in in Vor- und Rückhubrichtungen erfolgen. Zudem kann die Wirkfläche des Kolbens in Vor- und Rückhubrichtung reduziert werden, weil bei geöffneten Bypassventilschaltung A1-A2 im Vorhubrichtung und A2 im Rückhubrichtung wirksam ist. Damit kann die Drehmomentanforderung für den Elektromotor reduziert werden und es können Kosten gespart werden und die Belastung des Getriebes durch geringere Axialkräfte reduziert werden. Jede der beiden Steuer- und Regeleinrichtungen DV-ECU1 und DV-ECU2 sind über 1x3 Phasenleitungen mit jeweils getrennten Wicklungs- bzw. Phasensystemen des Motors M1 in Verbindung, so dass bei Ausfall einer Steuer- und Regelungseinrichtung bzw. eines Wicklungssystem der Motor M1 noch über das andere Wicklungs- bzw. Phasensystem und die andere Steuer- und Regeleinrichtung betrieben werden kann, auch wenn dann nur noch ca. das halbe Drehmoment mittels des Antriebes M1 erzeugbar ist. Eine oder beide Steuer- und Regeleinrichtung(en) weist bzw. weisen Sensoren zur Ermittlung der Temperatur T, des Motorstroms i sowie des Rotorwinkels α des Elektromotors auf. Zur Erzielung einer hohen Verfügbarkeit sind die nicht nur Steuer- und Regeleinrichtungen DV-ECU redundant ausgebildet, sondern auch Stromversorgungen BN1, BN2 sowie Daten- und Steuerleitungen DS1 und DS2 doppelt vorgesehen. Die Stromversorgungen BN1 und BN2 können z.B. unterschiedliche Spannungsniveaus eines Bordnetzes oder getrennte Bordnetze sein.

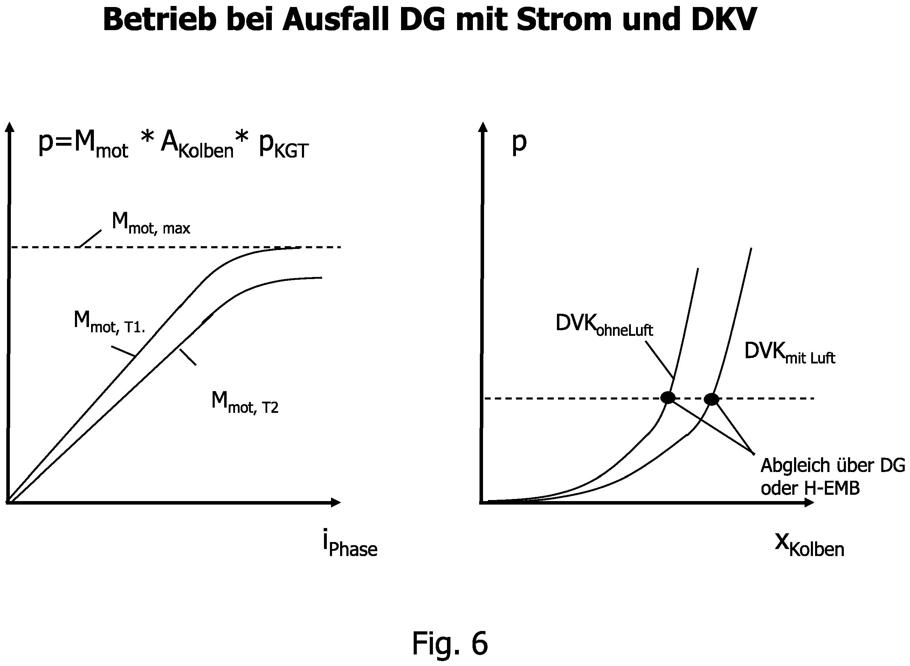

Die Figur 6 zeigt eine Bremsdruckregelung bei Ausfall des Druckgebers DG, wobei dann mittels Strommessung des Motorstroms $i_{phase}$ und Auswertung der Druck-Volumen-Kennlinie eine Regelung des Motormomentes $M_{Mot}$ und damit der Regelung des Drucks p vorgenommen wird. Dabei wird auch die Motortemperatur T berücksichtigt, da unter Temperatur sich die Drehmomentkonstante reduziert und somit einen Einfluss auf den Proportionalitätsfaktor kt $^*$ (1-Br% $^*$ΔT) zwischen Motormoment $M_{Mot}$ und Motorstrom $i_{phase}$ hat. Hierdurch ergibt sich vorteilhaft eine Redundanz der Druckmessung. So kann auch auf einen Druckgeber verzichtet werden. Die Kalibrierung der Regelung erfolgt dabei durch den Druckgeber und es wird primär mit Strom, Weg und Druckvolumenkennlinie geregelt werden.

Wobei

$$M_{mot} = kt^* \ i_{phase}^* (1 - Br\%^* \ \Delta T)$$

kt:   Drehmomentkonstante

$I_{phase}$:  Phasenstrom

ΔT:   Temperaturänderung in k

Br%:  typischer kt-Abfall-Faktor mit Zunahme der Temperatur

Das PPC-Verfahren (siehe Einleitung DE102005055751B4 und DE102005018649B4 ) kann dadurch verfeinert werden und wird für Bremse, Lenkung, Kupplungen, Torque Vektoring mit Kupplungslösung verwendet.

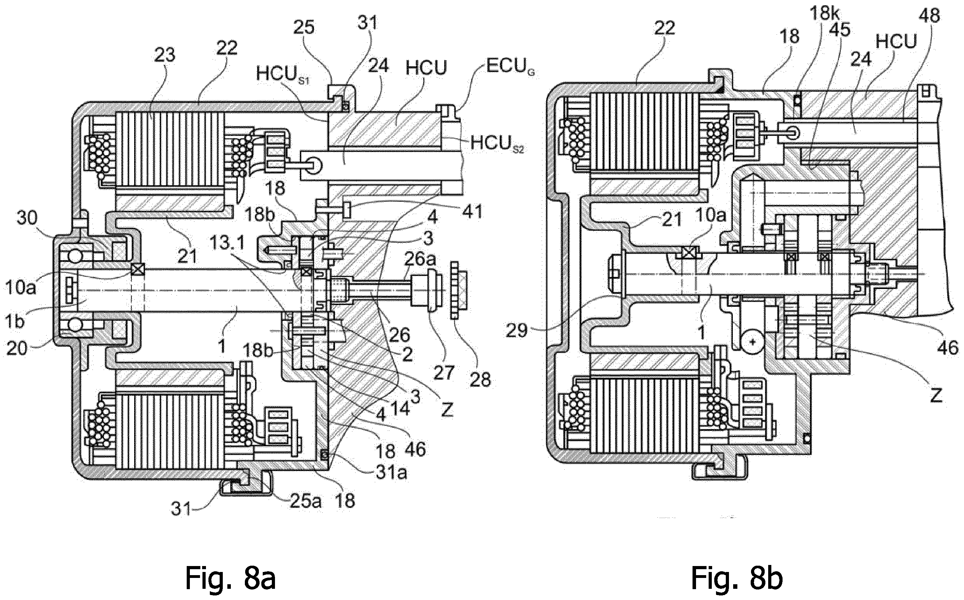

Die **Fig. 8a** zeigt eine Darstellung einer gesamten Baueinheit bestehend aus Motor 22, Pumpe Z, HCU und ECU, welche in der Lage ist, die Druckregelung und Steuerung für Systeme wie z.B. Bremse, Getriebe usw. auszuüben. Hierbei soll im Wesentlichen die Kombination Motor mit Pumpe dargestellt werden. Im Lagerflansch 18 ist die Pumpe angeordnet oder in einem separaten Pumpengehäuse 40, wie es in der oberen Bildhälfte dargestellt ist an HCU oder ECU befestigt. In **Fig. 8a** ist eine Version gezeigt, welche ein zusätzliches Motorlager 20 benötigt, in welchem die Welle 1 gelagert ist. Der Motor setzt sich wie üblich zusammen aus Rotor 21, welcher über den Mitnehmer 10a mit der Welle 1 verbunden ist. Der Rotor 21 wird über einen Permanentmagneten im Gehäuse 30 durch seine Kraft axial vorgespannt. Dies ist eine Lösung für den Motorhersteller, welcher Motor mit Gehäuse 22 und Stator und Wicklung 23 fertigt, prüft und an den Systemlieferanten zuliefert. Hierbei wird der Motor ohne Pumpe mit einer Hilfswelle geprüft. Danach wird bei Ausbau der Welle der Rotor durch die axiale Magnetkraft zentriert, so dass anschließend bei der Endmontage die Welle 1 mit dem Rotor zusammengebaut werden kann. Das Antriebsgehäuse muss hier zusätzlich mit dem Flansch 18 bei 25a - in der unteren Bildhälfte dargestellt - zusammengefügt und befestigt werden, z. B. mit Federn, welche segmentförmig über drei Verbindungen aufgesteckt werden. Hierbei ist auch eine Gehäusedichtung 31 notwendig. Die Befestigung kann durch Verstemmen, bei 25 von Motorflansch mit HCU oder ECU, siehe obere Bildhälfte 28, erfolgen. Hier ist die Version Pumpe mit Pumpengehäuse dargestellt. Der Motor ist hier als bürstenloser Motor dargestellt, der einen Motorsensor für die Kommutierung und Steuerung der Volumenförderung der Pumpe braucht. Dieser Motorsensor ist entfernt vom Antriebsgehäuse 22 angeordnet, wobei eine Sensorwelle 26, welche an der Antriebswelle 1 angeordnet bzw. befestigt ist, ein Sensortarget 27 trägt. Dieses Target 27 wirkt auf das Sensorelement 28, welches auf der Leiterplatte der ECU angeordnet ist. Die Wicklung ist über Kontaktschienen 24 mit der ECU verbunden.

Der Motor mit Lagerflansch 18 kann direkt mit dem Hydraulikgehäuse HCU, welches Ventile oder sonstige hydr. Komponenten beinhaltet, mit der Pumpe verbunden werden. Wenn dies nicht der Fall ist, so bietet sich eine Verbindung des Antriebsgehäuses 22, 18 direkt mit dem Gehäuse der ECU an.

Es ist ebenso möglich, die Zahnradpumpe Z in einem Pumpengehäuse 40 anzuordnen, welches direkt mit Hydraulikgehäuse HCU verbunden wird, wie es in **Figur 8a** in der oberen Hälfte der Antriebswelle 1 dargestellt ist. Vor dem Zusammenbau von Pumpengehäuse 40 und Hydraulikgehäuse HCU bzw. Pumpengehäuse 40 und ECU wird zunächst die Zahnradpumpe Z im Pumpengehäuse 40 integriert bzw. montiert, wobei anschließend der Rotor 21 auf die Welle 1 aufgepresst und anschließend mit dem Lager 20 zusammengebaut wird. Hierbei kann die Zugkraft des Magneten 30 zusätzlich auf den Rotor 21 und das Lager 20 wirken, womit das Lager wie ein Vierpunktlager wirkt. Damit ist das Motorgehäuse 22 mit der Zahnradpumpe Z und deren Pumpengehäuse 40 verbunden und kann im nächsten Schritt mit dem Hydraulikgehäuse HCU bzw. dem Elektronikgehäuse ECU verbunden werden. Dazu wird die Befestigungsschraube 41 verwendet. Die Welle 1 ist zuvor in den Außenscheiben 7.1 und 7.2 zentriert, so dass das Pumpengehäuse 40 vor der Verschraubung mit dem Hydraulikgehäuse HCU bzw. dem Elektronikgehäuse ECU mit der Welle 1 zentriert ist.

Die Druckversorgungseinrichtung gemäß Fig. 8b verwendet eine 2-stufige Pumpe mit langer Gleit- oder Wälzlagerung, welche keine getrennte Motorlagerung erfordert. Dementsprechend ist der Motoraufbau mit Gehäuse vereinfacht. Der Rotor 21 sitzt mit Mitnehmer 10a auf der Motorwelle und ist axial mit dem Sicherungsring verbunden. Das Pumpengehäuse ragt hier etwas in die HCU hinein.

**Patentansprüche**

1. Fahrzeugachse (VA, HA) mit hydraulisch wirkenden Radbremsen (RB1,RB2; RB3, RB4) und/oder weiteren hydraulischen Verbrauchern, insbesondere Kupplungstellerzylindern, folgende Komponenten aufweisend:

   - mindestens eine Druckversorgungseinrichtung (DV1, DV2) zur Druckregelung in den Radbremsen (RB1-RB4, H-EMB), die von einem elektromotorischen Antrieb (M1, M2) angetrieben wird,
   - mindestens eine elektronische Steuer- und Regeleinrichtung (DV ECU1, DV ECU2) und eine Ventilanordnung (HCU) mit Ventilen zum radindividuellen Einstellen von Bremsdrücken und/oder zum Trennen bzw. Verbinden der Radbremsen (RB1, RB2, RB3, RB4, H-EMB) mit der Druckversorgungseinrichtung (DV1, DV2),
   - mindestens einem elektrischen Antriebsmotor (TM, TM1, TM2) zum Antrieb und Abbremsen eines Fahrzeugrades oder der Fahrzeugachse,

   **dadurch gekennzeichnet, dass**
   mindestens eine Druckversorgungseinrichtung (DV1, DV2) zur Druckregelung und/oder Druckbereitstellung bei mindestens einem zusätzlichen Bremsaggregat (BA) in Form einer hydraulisch-unterstützten elektromechanischen Bremse (H-EMB), einer kraftunterstützenden, insbesondere hydraulisch wirkenden, Lenkungseinrichtung (EPS), einem Gang- und/oder Getriebesteller und/oder einem Torque-Vektoring-Modul dient.

2. Fahrzeugachse nach Anspruch 1, **dadurch gekennzeichnet, dass** die Druckversorgungseinrichtung eine Kolben-Zylinder-Einheit aufweist, deren Kolben über ein Getriebe, insbesondere einen Spindelantrieb, von einem elektromotorischen Antrieb (MI) zur Druckregelung in den Radbremsen (RB1-RB4, H-EMB) verstellt wird.

3. Fahrzeugachse nach Anspruch 1, **dadurch gekennzeichnet,**

   **dass** eine oder mehrere Komponenten oder deren Teilkomponenten der Druckversorgungseinrichtung (DV1, DV2), der elektronischen Steuer- und Regeleinrichtung (DV ECU1, DV ECU2) und/oder der Ventilanordnung (HCU) redundant ausgebildet ist bzw. sind,

   und/oder
   **dass** bei Teilausfall oder Komplettausfall der Druckversorgungseinrichtung (DV1, DV2), einer elektronischen Steuer- und Regeleinrichtung (DV ECU1, DV ECU2) und/oder der Ventilanordnung (HCL)) eine Bremskraft an der Fahrzeugachse oder mindestens einem Rad mittels der noch funktionsfähigen Komponenten, einer Betätigungseinrichtung, eines elektrischen Antriebsmotors (TM, TM1 ,TM2) und/oder mindestens eines zusätzlichen Bremsaggregates (BA) erzeugbar ist.

4. Fahrzeugachse nach Anspruch 1 oder 2, **dadurch gekennzeichnet, dass** zwei Druckversorgungseinrichtungen vorgesehen sind, die im Regelbetrieb zur Druckregelung und/oder Druckbereitstellung in unterschiedlichen Komponenten der Fahrzeugachse vorgesehen sind und bei einem Ausfall und/oder Teilausfall einer Druckversorgungseinrichtung die andere Druckversorgungseinrichtung die Druckregelung und/oder Druckbereitstellung mindestens einer der der ausgefallenen Druckversorgungseinrichtung zugeordneten Komponente mit übernimmt.

5. Fahrzeugachse nach einem der vorhergehenden Ansprüche, **dadurch gekennzeichnet, dass** die Fahrzeugachse eine Vorderachse (VA) ist, welche eine kraftunterstützende Lenkungseinrichtung (EHPS) aufweist.

6. Fahrzeugachse nach einem der vorhergehenden Ansprüche, **dadurch gekennzeichnet, dass** eine Betätigungseinrichtung (BE), insbesondere ein Bremspedal zum Druckaufbau in mindestens einer Radbremse oder ein E-Bremspedal aufweisend, und die Steuersignale der Betätigungseinrichtung (BE) zur Steuerung der Bremse dienen.

7. Fahrzeugachse nach einem der vorhergehenden Ansprüche, **dadurch gekennzeichnet, dass** eine übergeordnete Steuer- und Regeleinheit (MECU) zur Steuerung und/oder Regelung der Komponenten der Fahrzeugachse vorgesehen ist.

8. Fahrzeugachse nach einem der vorhergehenden Ansprüche, **dadurch gekennzeichnet, dass** zwei Hydraulikkreise mittels eines Verbindungsmoduls (VM) wahlweise voneinander trennbar oder miteinander verbindbar sind.

9. Fahrzeugachse nach einem der vorhergehenden Ansprüche, **dadurch gekennzeichnet, dass** ein Druckabbau im Regelbetrieb, insbesondere bei sehr hohen Druckdynamikanforderungen z.B. bei high-$\mu$-ABS-Regelung insbesondere bei Ausfall einer Druckversorgung DV1, DV2 bzw. einer ECU einer Druckversorgung in einer Radbremse (RB1-RB4) über das Öffnen eines Auslassventils (AV) in den Vorratsbehälter (VB), insbesondere im erweiterten Multiplexbetrieb (sog. MUX 2.0-Verfahren), bei dem eine Druckversorgungseinrichtung (DV1, DV2) für alle Radbremsen (RB1-RB4) die Druckregelung übernimmt, erfolgt.

10. Fahrzeugachse nach einem der vorhergehenden Ansprüche, **dadurch gekennzeichnet, dass** mindestens eine Radbremse, vorzugsweise zwei Radbremsen, eine hydraulisch unterstützte elektromechanische Bremse (HEMB), eine elektrische Parkbremse (EPB) oder eine elektromechanische Bremse (EMB) ist oder neben der Radbremse (RB1-RB4) eine zusätzliche Parkbremse (EPB), eine hydraulisch unterstützte elektromechanische Bremse (H-EMB) oder elektromechanische Bremse (EMB) auf das Rad abbremsend einwirkt.

11. Fahrzeugachse nach einem der vorhergehenden Ansprüche, **dadurch gekennzeichnet, dass** ein elektrischer Antriebsmotor (EM, TM1, TM2) für das Abbremsen der Fahrzeugachse oder eines Rades genutzt wird.

12. Fahrzeugachse nach einem der vorhergehenden Ansprüche, **dadurch gekennzeichnet, dass** die übergeordnete Steuerungseinheit (M-ECU) beim Bremsen, insbesondere mit Rekuperation, das mittels der Radbremsen (RB1-RB4) zu erzeugende Bremsmoment bestimmt und die elektronischen Steuer- und Regeleinheiten (ECU1, ECU2) der Druckversorgungseinrichtungen (DV1, DV2) entsprechend ansteuert und/oder den mindestens einen elektrischen Antriebsmotor (TM1, TM2) zum Aufbau eines zusätzlich zu den von den Radbremsen (RB1-RB4) erzeugten Bremsmomentes ansteuert bzw. verwendet.

13. Fahrzeugachse nach einem der vorhergehenden Ansprüche, **dadurch gekennzeichnet, dass** die übergeordnete Steuerungseinheit (M-ECU) die kraftunterstützende Lenkung (EPS, EHPS) steuert.

14. Fahrzeugachse nach einem der vorhergehenden Ansprüche, **dadurch gekennzeichnet, dass** das Torque-Vektoring-Modul hydraulisch über die Druckversorgungseinrichtung (DV1, DV2) und Ventile der HCU steuerbar bzw. gesteuert ist.

15. Fahrzeug mit mindestens einer Fahrzeugachse nach einem der vorhergehenden Ansprüche.

**Claims**

1. Vehicle axle (VA, HA) with hydraulically operated wheel brakes (RB1, RB2; RB3, RB4) and/or further hydraulic consumers, in particular clutch plate cylinders, having the following components:

   - at least one pressure supply device (DV1, DV2) for controlling pressure in the wheel brakes (RB1-RB4, H-EMB), which is driven by an electric motor drive (M1, M2),
   - at least one electronic open-loop and closed-loop control device (DV ECU1, DV ECU2) and a valve assembly (HCU) with valves for regulating the brake pressures of individual wheels and/or for disconnecting or connecting the wheel brakes (RB1, RB2, RB3, RB4, H-EMB) from or to the pressure supply device (DV1, DV2),
   - at least one electric drive motor (TM, TM1, TM2) for driving and braking a vehicle wheel or the vehicle axle,

   **characterized in that**,
   at least one pressure supply device (DV1, DV2) serves for regulating pressure and/or supplying pressure for at least one additional brake unit (BA) in the form of a hydraulically supported electromechanical brake (H-EMB), a power-assisted, in particular hydraulically operated, steering device (EPS), a gear actuator and/or transmission actuator and/or a torque vectoring module.

2. Vehicle axle according to claim 1, **characterized in that** the pressure supply device has a piston-cylinder unit, the piston of which is adjusted via a gear, in particular a spindle drive, of an electric motor drive (M1) for controlling pressure in the wheel brakes (RB1-RB4, H-EMB).

3. Vehicle axle according to claim 1, **characterized in that**,

   one or more components or sub-components thereof of the pressure supply device (DV1, DV2), the open-loop and closed-loop control device (DV ECU1, DV ECU2) and/or the valve assembly (HCU) is or are formed redundant, and/or
   that in the event of partial failure or complete failure of the pressure supply device (DV1, DV2), an electronic open-loop and closed-loop control device (DV ECU1, DV ECU2) and/or the valve assembly (HCL), a brake force can be generated on the vehicle axle or at least one wheel by means of the still functioning components, an actuation device, an electric drive motor (TM, TM1, TM2) and/or at least one additional brake unit (BA).

4. Vehicle axle according to claim 1 or 2, **characterized in that** two pressure supply devices are provided, which are provided for regulating pressure and/or supplying pressure in different components of the vehicle axle in normal operation, and in the event of a failure and/or partial failure of a pressure supply device the other pressure supply device also undertakes the pressure regulation and/or pressure supply of at least one of the components allocated to the failed pressure supply device.

5. Vehicle axle according one of the preceding claims, **characterized in that** the vehicle axle is a front axle (VA), which has a power-assisted steering device (EHPS).

6. Vehicle axle according to one of the preceding claims, **characterized in that** an actuation device (BE), in particular having a brake pedal for pressure build-up in at least one wheel brake or an e-brake pedal, and the control signals of the actuating device (BE) serve for controlling the brakes.

7. Vehicle axle according to one of the preceding claims, **characterized in that** an superordinate open-loop and closed-loop control unit (MECU) is provided for open-loop and/or closed-loop control of the components of the vehicle axle.

8. Vehicle axle according to one of the preceding claims, **characterized in that** two hydraulic circuits are optionally separable from each other or connectable to each other by means of a connection module (VM).

9. Vehicle axle according to one of the preceding claims, **characterized in that** in normal operation a pressure reduction, in particular during very high pressure dynamic requirements, for example during high $\mu$-ABS control, in particular in the event of failure of a pressure supply DV1, DV2 or an ECU of a pressure supply in a wheel brake (RV1-RB4), takes place via the opening of an outlet valve (AV) into the reservoir (VB), in particular in the extended multiplex mode (the so-called MUX 2.0 method) in which a pressure supply device (DV1, DV2) undertakes the pressure regulation for all wheel brakes (RB1-RB4).

10. Vehicle axle according to one of the preceding claims, **characterized in that** at least one wheel brake, preferably two wheel brakes, is a hydraulically supported electromechanical brake (HEMB), an electric parking brake (EPB), or an electromechanical brake, or, in addition to the wheel brake (RB1-RB4), an additional parking brake (EPB), a hydraulically supported electromechanical brake (H-EMB) or electromechanical brake (EMB) has a braking effect on the wheel.

11. Vehicle axle according to one of the preceding claims, **characterized in that** an electric drive motor (EM, TM1, TM2) is used for braking the vehicle axle or a wheel.

12. Vehicle axle according to one of the preceding claims, **characterized in that** during braking, in particular with recuperation, the superordinate open-loop control unit (M-ECU) determines the braking torque to be generated by means of the wheel brakes (RB1-RB4), and drives the open-loop and closed-loop control units (ECU1, ECU2) of the pressure supply devices (DV1, DV2) accordingly, and/or drives or uses the at least one electric drive motor (TM1, TM2) to build up a braking torque in addition to that generated by the wheel brakes (RB1-RB4).

13. Vehicle axle according to one of the preceding claims, **characterized in that** the superordinate open-loop control unit (M-ECU) controls the power-assisted steering (EPS, EHPS).

14. Vehicle axle according to one of the preceding claims, **characterized in that** the torque vectoring module can be controlled or is controlled hydraulically via the pressure supply device (DV1, DV2) and valves of the HCU.

15. Vehicle with at least one vehicle axle according to one of the preceding claims.

**Revendications**

1. Essieu de véhicule (VA, HA) doté de freins de roue hydrauliques (RB1, RB2 ; RB3, RB4) et/ou d'autres récepteurs hydrauliques, notamment de cylindres d'actionneur d'embrayage, présentant les composants suivants :

   - au moins un dispositif d'alimentation en pression (DV1, DV2) servant à régler la pression dans les freins de roue (RB1-RB4, H-EMB) et entraîné par une propulsion électromotorisée (M1, M2) ;
   - au moins un dispositif de commande et de réglage électronique (DV ECU1, DV ECU2) et un agencement de soupape (HCU) avec des soupapes de réglage individualisé par roue de la pression de freinage et/ou pour séparer et/ou relier les freins de roue (RB1, RB2, RB3, RB4, FI-EMB) au dispositif d'alimentation en pression (DV1, DV2) ;
   - au moins un moteur à propulsion électrique (TM, TM1, TM2) pour la propulsion et le freinage d'une roue de véhicule ou de l'essieu de véhicule ;

   **caractérisé en ce que**:

au moins un dispositif d'alimentation en pression (DV1, DV2) sert pour le réglage de pression et/ou la mise à disposition de pression dans au moins un groupe de freinage supplémentaire (BA) sous la forme d'un frein électromécanique à assistance hydraulique (H-EMB), d'un dispositif de direction assistée (EPS) notamment hydraulique, d'un actionneur de vitesse ou de boîte de vitesses et/ou d'un module de vectorisation de couple.

2. Essieu de véhicule selon la revendication 1, **caractérisé en ce que** le dispositif d'alimentation en pression comporte une unité cylindre-piston dont le piston peut être déplacé via une boîte de vitesses, notamment un entraînement à broche, depuis une propulsion électromotorisée (M1) jusqu'au réglage de pression prévu dans les freins de roue (RB1-RB4, H-EMB).

3. Essieu de véhicule selon la revendication 1, **caractérisé en ce que** :

   un ou plusieurs composants ou composants partiels du dispositif d'alimentation en pression (DV1, DV2), du dispositif de commande et de réglage électronique (DV ECU1, DV ECU2) et/ou de l'agencement de soupape (HCU) est et/ou sont réalisés de façon redondante;
   qu'en cas de panne partielle ou de panne totale du dispositif d'alimentation en pression (DV1, DV2), d'un dispositif de commande et de réglage électronique (DV ECU1, DV ECU2) et/ou de l'agencement de soupape (HCL)), une force de freinage est appliquée au niveau de l'essieu de véhicule ou d'au moins une roue à l'aide des composants encore fonctionnels, d'un dispositif d'actionnement, d'un moteur à propulsion électrique (TM, TM1, TM2) et/ou d'au moins un groupe de freinage supplémentaire (BA).

4. Essieu de véhicule selon la revendication 1 ou 2, **caractérisé en ce que** deux dispositifs d'alimentation en pression sont prévus en mode de réglage pour le réglage de pression et/ou la mise à disposition de pression dans différents composants de l'essieu de véhicule et qu'en cas de panne et/ou de panne partielle d'un dispositif d'alimentation en pression, l'autre dispositif d'alimentation en pression reprend le réglage de pression et/ou la mise à disposition de pression d'au moins un composant associé au dispositif d'alimentation en pression défaillant.

5. Essieu de véhicule selon l'une quelconque des revendications précédentes, **caractérisé en ce que** l'essieu de véhicule comporte un essieu avant (VA) qui comporte un dispositif de direction assistée (EHPS).

6. Essieu de véhicule selon l'une quelconque des revendications précédentes, **caractérisé en ce qu'**un dispositif d'actionnement (BE), notamment une pédale de frein servent à la mise sous pression dans au moins un frein de roue ou comportant une e-pédale de frein et que les signaux de commande du dispositif d'actionnement (BE) servent à commander le frein.

7. Essieu de véhicule selon l'une quelconque des revendications précédentes, **caractérisé en ce qu'**une unité de commande et de réglage maître (MECU) est prévue pour commander et/ou régler les composants de l'essieu de véhicule.

8. Essieu de véhicule selon l'une quelconque des revendications précédentes, **caractérisé en ce que** deux circuits hydrauliques peuvent être séparés l'un de l'autre ou reliés entre eux au choix à l'aide d'un module de liaison (VM).

9. Essieu de véhicule selon l'une quelconque des revendications précédentes, **caractérisé en ce qu'**une baisse de pression en mode de réglage, notamment en cas de demandes très élevées en pression par exemple en cas de réglage ABS à niveau de friction élevé $\mu$, notamment en cas de panne d'une alimentation en pression DV1, DV2 et/ou d'un ECU d'une alimentation en pression dans un frein de roue (RB1-RB4) s'effectue via l'ouverture d'une soupape d'échappement (AV) dans le bac de réserve (VB), notamment en mode multiplexe étendu (notamment ledit procédé MUX 2.0) dans lequel un dispositif d'alimentation en pression (DV1, DV2) réalise le réglage de pression pour tous les freins de roue (RB1-RB4).

10. Essieu de véhicule selon l'une quelconque des revendications précédentes, **caractérisé en ce qu'**au moins un frein de roue, de préférence deux freins de roue, est ou sont un frein électromécanique à assistance hydraulique (HEMB), un frein de stationnement électrique (EPB) ou un frein électromécanique (EMB) ou qu'outre le frein de roue (RB1-RB4), un frein de stationnement supplémentaire (EPB), un frein électromécanique à assistance hydraulique (H-EMB) ou un frein électromécanique (EMB) a une action freinante sur la roue.

11. Essieu de véhicule selon l'une quelconque des revendications précédentes, **caractérisé en ce qu'**un moteur à propulsion électrique (EM, TM1, TM2) est utilisé pour le freinage de l'essieu de véhicule ou d'une roue.

12. Essieu de véhicule selon l'une quelconque des revendications précédentes, **caractérisé en ce que** l'unité de commande maître (M-ECU) est utilisée lors du freinage, notamment avec récupération, définissant, à l'aide des freins de roue (RB1-RB4), le couple de freinage à produire et excitant et/ou utilisant de façon correspondante les unités de commande et de réglage électroniques (ECU1, ECU2) des alimentations en pression (DV1, DV2) et/ou l'au moins un moteur à propulsion électrique (TM1, TM2) pour mettre en place un couple de freinage produit en sus de celui des freins de roue (RB1-RB4).

13. Essieu de véhicule selon l'une quelconque des revendications précédentes, **caractérisé en ce que** l'unité de commande maître (M-ECU) commande la direction assistée (EPS, EHPS).

14. Essieu de véhicule selon l'une quelconque des revendications précédentes, **caractérisé en ce que** le module de vectorisation de couple est commandé et/ou peut être commandé de façon hydraulique via le dispositif d'alimentation en pression (DV1, DV2) et les soupapes du HCU.

15. Véhicule avec au moins un essieu de véhicule selon l'une quelconque des revendications précédentes.

Fig. 1

Fig.1a

Fig.1b

Fig. 1c

EP 3 898 359 B1

Fig. 2

EP 3 898 359 B1

Fig. 2a

EP 3 898 359 B1

Fig. 2b

$F_{EM}$

$F_{hyd}$

EM

G

DV

EP 3 898 359 B1

Fig. 3

R1
RB1
EM
EM-ECU
SG-ECU
SG
TVM
GS
R2
RB2
HCU
DV 1
ECU DV1
ECU DV2
DV 2
M-ECU
(E)-Bremspedal
(E)-Gaspedal
100
Systemgrenze der Fahrzeugachse

EP 3 898 359 B1

Fig. 3a

Fig. 3b

EP 3 898 359 B1

Fig. 3c

Bestandteil
E-Achse A2

A2

Fig. 3d

Fig. 3e

Fig. 3f

Fig. 4

Fig. 5

EP 3 898 359 B1

# Betrieb bei Ausfall DG mit Strom und DKV

$$p = M_{mot} * A_{Kolben} * p_{KGT}$$

$M_{mot, max}$

$M_{mot, T1.}$

$M_{mot, T2}$

$i_{Phase}$

$p$

$DVK_{ohneLuft}$

$DVK_{mit\ Luft}$

Abgleich über DG
oder H-EMB

$x_{Kolben}$

Fig. 6

EP 3 898 359 B1

EP 3 898 359 B1

| | e-BKV | ABS | Lenkung/ Torque Vektoring (TV) | Stabilität (ESP) | Energie Rück- gewinnung | Park- bremse |
|---|---|---|---|---|---|---|
| DV1-A1 (6Ph) DV1-A1 (3Ph) DV2-A1 DVx-A2 | | | | | | |
| GS | | | | | | |
| EM1 EM2 (TV) | EM1, EM2 | | EM1, EM2, TV | | | |
| EHPS | | | | | | |
| H-EMB EMB EPB | | | | | | |

▢ Primärfunktion

⬚ Sekundärfunktion /Redundanz

Fig. 7

Fig. 8b

Fig. 8a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112009005541 B3
- DE 102005055751 B4
- DE 102005018649 B4
- EP 1874602 B1
- EP 2396202 B1
- EP 1759447 B1
- WO 201614622 A2
- WO 2013140221 A1
- EP 2137427 A1
- EP 2017054643 W